(19) Europäisches Patentamt
European Patent Office
Office européen des brevets

(11) EP 3 904 395 A1

(12) **EUROPEAN PATENT APPLICATION**
published in accordance with Art. 153(4) EPC

(43) Date of publication:
**03.11.2021 Bulletin 2021/44**

(21) Application number: **19905164.0**

(22) Date of filing: **25.12.2019**

(51) Int Cl.:
***C08F 2/44*** *(2006.01)* ***C08F 2/46*** *(2006.01)*
***C09D 11/101*** *(2014.01)* ***C09D 11/30*** *(2014.01)*
***C09D 11/36*** *(2014.01)*

(86) International application number:
**PCT/JP2019/050742**

(87) International publication number:
**WO 2020/138132 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018245157**

(71) Applicant: **Sakata INX Corporation**
**Osaka-shi, Osaka 550-0002 (JP)**

(72) Inventors:
- **HISHINUMA Keishiro**
  **Osaka-shi, Osaka 550-0002 (JP)**
- **OMI Naoki**
  **Osaka-shi, Osaka 550-0002 (JP)**

(74) Representative: **Grünecker Patent- und Rechtsanwälte**
**PartG mbB**
**Leopoldstraße 4**
**80802 München (DE)**

# (54) ACTIVE ENERGY RAY-CURABLE COMPOSITION

(57) An object is to obtain an active energy ray-curable composition which can constitute an active energy ray-curable composition having a higher ratio of biomass-derived raw material, while still maintaining such basic properties as curability, compatibility, adhesion, physical properties of cured product (cured coating film), etc., and which is also superior in that it uses nonedible biomass and thus does not compete with food production and prevents triggering starvation and food shortage problems, and therefore contributes significantly to the creation of a sustainable, recycling-oriented society, and another object is to provide an active energy ray-curable composition which is superior in terms of environmental, safety, and other regulations, because it can be effective without using a polymerization initiator. As a solution, an active energy ray-curable composition containing one or more types of compound expressed by Formula (1) and/or Formula (2) below is provided:

Formula (1):

[Chem. 1]

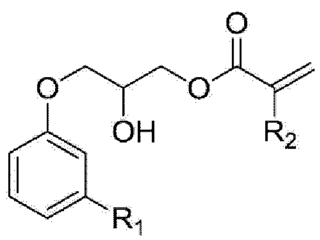

(1)

(In the formula, $R_1$ represents a $-C_{15}H_{31-2n}$ group (n = 0, 1, 2 or 3). $R_2$ represents a hydrogen or methyl group.)

EP 3 904 395 A1

Formula (2):

[Chem. 2]

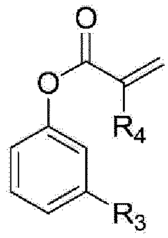

(2)

(In the formula, $R_3$ represents a $-C_{15}H_{31-2n}$ group (n = 0, 1, 2 or 3). $R_4$ represents a hydrogen or methyl group.)

An active energy ray-curable composition includes one or more compounds expressed by Formula (1) and/or Formula (2) below:

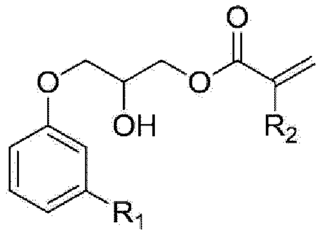

(1)

wherein $R_1$ represents a $-C_{15}H_{31-2n}$ group (n = 0, 1, 2 or 3). $R_2$ represents a hydrogen or methyl group;

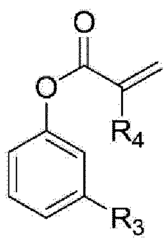

(2)

wherein $R_3$ represents a $-C_{15}H_{31-2n}$ group (n = 0, 1, 2 or 3). $R_4$ represents a hydrogen or methyl group.)

## Description

### Technical Field

The present invention relates to an active energy ray-curable composition.

### Background Art

Efforts are underway in various industries and sectors to reduce environmental impact from various angles, with the goal of protecting the global environment. For example, there are efforts to reduce environmental impact by voluntarily regulating/reducing use of VOCs (volatile organic compounds) contained in paints, inks, etc., that cause global warming.

In the interest of reducing VOCs, utilization of active energy ray-curable compositions that cure under ultraviolet ray, electron beam, and other active energy rays is being studied. Active energy ray-curable compositions contain polymerizable compounds that polymerize when irradiated with active energy rays. Active energy ray-curable compositions can curb the use of VOCs to eliminate or reduce VOC volatilization volumes and also cure quickly (have quick drying property), thereby contributing to reduction of environmental impact, energy savings, productivity improvement, etc.

Printed matters that have been printed by various methods cannot be forwarded for post-processing or distributed as products until the surface inks become sufficiently dry to prevent the inks from transferring to the back side of sheets when the printed matters are stacked, or from attaching to objects that come in contact with the printed matters. This is why the popularity of active energy ray curable inks is increasing that use active energy ray-curable compositions to allow the inks on the surface of the printed matter to be cured (dried) instantly by irradiating an active energy ray immediately after printing. Such active energy ray curable inks are widely known, as described in Patent Literatures 1 and 2, for example.

Active energy ray-curable compositions are the target of various measures designed to reduce environmental impact. Examples of such measures include, for example, development of products that can be cured (dried) with less active energy ray irradiation, and replacement of high-pressure mercury lamps, etc., that consume a lot of power and cause ozone to generate at short UV wavelengths, with UV LED lamps and low-output UV lamps that are energy-efficient and reduce ozone generation.

As part of environmental impact reduction efforts, recent years have seen an adoption of biomass products that use raw materials derived from biomass which is a recyclable resource, instead of those derived from fossil resources, and therefore prevent $CO_2$ in the environment from increasing (carbon neutral), in order to reduce greenhouse gas emissions. For example, the printing ink industry has introduced the Ink Green Mark (IG Mark) system in an effort to reduce environmental impact by classifying printing inks into three levels of eco-friendliness using the percentage of biomass-derived components in printing inks as the indicator. However, traditional active energy ray curable inks use large amounts of polymerizable components derived from fossil resources as raw materials, which makes it difficult to bring them into compliance with the IG Mark certification standards; moreover, obtaining biomass-derived polymerizable compounds in large volumes has been considered difficult.

In the meantime, there have been studies of late to utilize nonedible biomass components (biomass components not for human consumption, particularly biomass components obtained from substances not for human consumption) as biomass-derived components so as not to compete with food production. For example, Patent Literature 3 describes using, as a printing ink, a UV-curable composition based on a urethane acrylate synthesized from a cardanol contained in cashew-nut shell liquid or derivative thereof, etc.; however, obtaining such urethane acrylate in large volumes is considered difficult.

### Background Art Literature

### Patent Literature

Patent Literature 1: Japanese Patent Laid-open No. 2017-137369
Patent Literature 2: Japanese Patent Laid-open No. 2015-081264
Patent Literature 3: Japanese Patent No. 5335436

**Non-patent Literature**

**Problems to Be Solved by the Invention**

In light of the aforementioned situation, one object of the present invention is to constitute an active energy ray-curable composition having a higher ratio of biomass-derived raw material, while still maintaining such basic properties as curability, compatibility, adhesion, physical properties of cured product (cured coating film), etc. Another object is to provide an active energy ray-curable composition which is superior in that it uses nonedible biomass and thus does not compete with food production and prevents triggering starvation and food shortage problems, and therefore contributes significantly to the creation of a sustainable, recycling-oriented society. Yet another object is to provide an active energy ray-curable composition which can cure in the absence of polymerization initiator and is superior in light of environmental, other regulations, and safety, etc.

**Means for Solving the Problems**

After studying in earnest to achieve the aforementioned objects, the inventors of the present invention found that the aforementioned objects could be achieved by an active energy ray-curable composition that contains one or more types of cardanol derivative compound with ethylenic unsaturated bond, and therefore completed the present invention. To be specific, the present invention is as described below.

Item 1: An active energy ray-curable composition containing one or more types of compound expressed by Formula (1) and/or Formula (2) below:

Formula (1):

[Chem. 1]

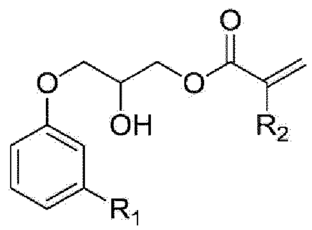

(1)

(In the formula, $R_1$ represents a $-C_{15}H_{31-2n}$ group (n = 0, 1, 2 or 3). $R_2$ represents a hydrogen or methyl group.)

Formula (2):

[Chem. 2]

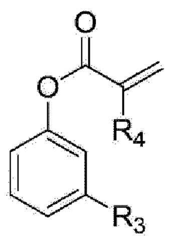

(2)

(In the formula, $R_3$ represents a $-C_{15}H_{31-2n}$ group (n = 0, 1, 2 or 3). $R_4$ represents a hydrogen or methyl group.)

Item 2: The active energy ray-curable composition according to Item 1, further containing a compound with ethylenic unsaturated bond other than the compound expressed by Formula (1) or Formula (2) above.

Item 3: The active energy ray-curable composition according to Item 1 or 2, further containing a colorant.

Item 4: The active energy ray-curable composition according to any one of Items 1 to 3, further containing a resin.

Item 5: The active energy ray-curable composition according to any one of Items 1 to 4, further containing a component satisfying Condition (A) or Condition (B) below:

Condition (A): Contains a compound with no ethylenic unsaturated bond and of 9.0 $(cal/cm^3)^{1/2}$ or higher but under 11.0 $(cal/cm^3)^{1/2}$ in sp value, and is liquid at normal temperature.
Condition (B): Contains a compound with no ethylenic unsaturated bond and of under 9.0 $(cal/cm^3)^{1/2}$ in sp value, and is liquid at normal temperature.

Item 6: The active energy ray-curable composition according to any one of Items 1 to 4, further containing a compound with ethylenic unsaturated bond having an amino and/or amide group, and/or compound having two active energy ray-curable functional groups and two amino groups in its molecule.

Item 7: The active energy ray-curable composition according to any one of Items 1 to 4, further containing a plant oil-modified polyfunctional (polyester) oligomer and a (meth)acrylamide-based compound.

Item 8: An active energy ray-curable offset printing ink composition containing the active energy ray-curable composition according to any one of Items 1 to 5.

Item 9: An active energy ray-curable inkjet printing ink composition containing the active energy ray-curable composition according to any one of Items 1 to 4 and 6.

Item 10: An active energy ray-curable flexographic printing ink composition containing the active energy ray-curable composition according to any one of Items 1 to 4 and 7.

**Effects of the Invention**

According to the present invention, an energy ray-curable composition having a higher ratio of biomass-derived raw material, while still maintaining such basic properties as curability, compatibility, adhesion, physical properties of cured product (cured coating film), etc., can be constituted. Moreover, an active energy ray-curable composition can be provided which is superior in that it uses nonedible biomass and thus does not compete with food production and prevents triggering starvation and food shortage problems, and therefore contributes significantly to the creation of a sustainable, recycling-oriented society. Furthermore, an active energy ray-curable composition can be provided which can be effect in the absence of polymerization initiator and is superior in light of environmental, other regulations, and safety, etc.

**Mode for Carrying Out the Invention**

Embodiments of the present invention are explained below. It should be noted that the present invention is not limited to the following embodiments and may be implemented by adding changes as deemed appropriate within the scope of the present invention.

[Active Energy Ray-curable Composition]

<Active Energy Ray>

Under the present invention, an active energy ray polymerizes the active energy ray-curable composition and has a wavelength of 10 nm to 100 μm, for example. For such active energy ray, one or more types selected from the group that consists of ultraviolet ray (vacuum ultraviolet ray, far-ultraviolet ray, near-ultraviolet ray), visible light, infrared light (near-infrared ray, middle-infrared ray, far-infrared ray), electron beams, laser light, etc., may be used.

As for the source (light source) of the active energy ray, one or more types selected from the group that consists of ultrahigh-pressure mercury lamps, high-pressure mercury lamps, low-pressure mercury lamps, mercury xenon lamps, metal halide lamps, high-power metal halide lamps, xenon lamps, pulsed-emission xenon lamps, deuterium lamps, fluorescent light, Nd-YAG third-harmonic lasers, He-Cd lasers, nitrogen lasers, Xe-Cl excimer lasers, Xe-F excimer lasers, diode-pumped solid-state lasers, LED lamps, etc., may be used. Preferably a light-emitting diode (LED) generating an ultraviolet ray of 350 to 420 nm in emission peak wavelength may be used in consideration of the environment.

<Compound Expressed by Formula (1)>

Formula (1)

[Chem. 3]

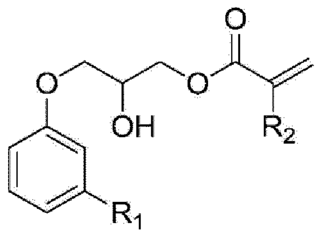

(1)

(In the formula, $R_1$ represents a $-C_{15}H_{31-2n}$ group (n = 0, 1, 2 or 3). $R_2$ represents a hydrogen or methyl group.)

In the compound expressed by Formula (1) above, the $R_1$ group has a structure corresponding to one of (1a) to (1d) below:

- $(CH_2)_{14}CH_3$ --- (1a)
- $(CH_2)_7CH=CH(CH_2)_5CH_3$ --- (1b)
- $(CH_2)_7CH=CHCH_2CH=CH(CH_2)_2CH_3$ --- (1c)
- $(CH_2)_7CH=CHCH_2CH=CHCH_2CH=CH_2$ --- (1d)

In the active energy ray-curable composition proposed by the present invention, a mixture of compounds that each have different $R_1$ and/or $R_2$ groups may be used as the compound expressed by Formula (1).

For the compound expressed by Formula (1), a synthesized compound or commercial product may be used. When synthesizing this compound, it can be done by one of the following methods, for example: (i) method of reacting a cardanol derived from cashew-nut shell liquid with a glycidyl methacrylate under known conditions to cause the phenolic hydroxyl groups in the cardanol to react with the glycidyl groups; and (ii) method of reacting a cardanol-derived epoxy compound expressed by Formula (3) below (such as "Cardolite NC-513" or "Cardolite LITE 2513HP," product names, manufactured by Cardolite Corporation) with a (meth)acrylic acid under known conditions to cause the carboxyl groups in the acrylic acid to react with the glycidyl groups.

Formula (3)

[Chem. 4]

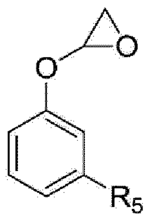

(3)

(In the formula, $R_5$ represents a $-C_{15}H_{31-2n}$ group (n = 0, 1, 2 or 3).)

Also, among commercial products, Cardolite (registered trademark) GX-7202, etc., manufactured by Cardolite Corporation may be used.

The compound expressed by Formula (1) is contained by a quantity equivalent to 0 to 100% by mass, or preferably 0 to 50% by mass, or more preferably 0 to 30% by mass, in the active energy ray-curable composition. It should be noted that, if the compound expressed by Formula (1) is not contained in the active energy ray-curable composition, the compound expressed by Formula (2) must be contained in the active energy ray-curable composition. Also, if both the compound expressed by Formula (1) and compound expressed by Formula (2) are contained, the mixing ratio of the two may be set to an arbitrary ratio, such as a ratio by mass (Compound expressed by Formula (1)/Compound expressed by Formula (2)) between 1/99 and 99/1.

<Compound Expressed by Formula (2)>

Formula (2)

[Chem. 5]

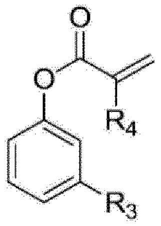

(2)

(In the formula, $R_3$ represents a $-C_{15}H_{31-2n}$ group (n = 0, 1, 2 or 3). $R_4$ represents a hydrogen or methyl group.) In the compound expressed by Formula (2) above, the $R_3$ group has a structure corresponding to one of (2a) to (2d) below:

- $(CH_2)_{14}CH_3$ --- (2a)
- $(CH_2)_7CH=CH(CH_2)_5CH_3$ --- (2b)
- $(CH_2)_7CH=CHCH_2CH=CH(CH_2)_2CH_3$ --- (2c)
- $(CH_2)_7CH=CHCH_2CH=CHCH_2CH=CH_2$ --- (2d)

In the active energy ray-curable composition proposed by the present invention, a mixture of compounds that each have different $R_3$ and $R_4$ groups may be used as the compound expressed by Formula (2).

For the compound expressed by Formula (2), a synthesized compound or commercial product may be used. When synthesizing this compound, it can be done by, for example, reacting a cardanol derived from cashew-nut shell liquid with an acrylic acid chloride under known conditions. Also, among commercial products, Cardolite GX-7201, etc., manufactured by Cardolite Corporation may be used.

The compound expressed by Formula (2) is contained by a quantity equivalent to 0 to 100% by mass, or preferably 0 to 50% by mass, or more preferably 0 to 30% by mass, in the active energy ray-curable composition. It should be noted that, if the compound expressed by Formula (2) is not contained in the active energy ray-curable composition, the compound expressed by Formula (1) must be contained in the active energy ray-curable composition. Also, if both the compound expressed by Formula (1) and compound expressed by Formula (2) are contained, the mixing ratio of the two may be set to an arbitrary ratio, such as a ratio by mass (Compound expressed by Formula (1)/Compound expressed by Formula (2)) between 1/99 and 99/1.

<Compound with Ethylenic Unsaturated Bond Other than Compound Expressed by Formula (1) or Formula (2)>

For the compound with ethylenic unsaturated bond other than the compound expressed by Formula (1) or Formula (2), one or more types selected from known or commercially available compounds having one or more ethylenic unsaturated bonds in the molecule may be used without limitation. Here, "ethylenic unsaturated bond" refers to a double bond between radically polymerizable carbon atoms such as those found in vinyl groups, allyl groups (2-propenyl groups), and (meth)acryloyl groups, etc.

Use of a compound having one ethylenic unsaturated bond in its molecule allows for reduction in cure shrinkage, while use of a compound having two or more ethylenic unsaturated bonds in its molecule permits adjustment of intermolecular crosslinking, cure rate, film strength, etc. As it is in liquid state at normal temperature/normal pressure prior to polymerization by active energy ray irradiation, the compound with ethylenic unsaturated bond other than the compound expressed by Formula (1) or Formula (2) can be used as a viscosity-adjusting agent (reactive diluent) for the active energy ray-curable composition and it can also dissolve various components.

For the compound with ethylenic unsaturated bond other than the compound expressed by Formula (1) or Formula (2), one or more types selected from the group that consists of those listed below may be used, for example. It should be noted that "(meth)acrylate" refers to "acrylate" or "methacrylate," "(meth)acrylic acid" refers to "acrylic acid" or "methacrylic acid," and "(meth)acrylamide" refers to "acrylamide" or "methacrylamide," respectively.

(Compound Having One Ethylenic Unsaturated Bond)

The active energy ray-curable composition proposed by the present invention may use without limitation, as the compound with ethylenic unsaturated bond other than the compound expressed by Formula (1) or Formula (2), any known or commercially available compound having one ethylenic unsaturated bond. For such compound, one or more types selected from the group that consists of the compounds listed below, for example, may be used.

- Unsaturated Carboxylic Acid-based Compounds -

Among unsaturated carboxylic acid-based compounds, one or more types selected from the group that consists of (meth)acrylic acid, itaconic acid, crotonic acid, isocrotonic acid, fumaric acid, maleic acid, and other unsaturated carboxylic acids, as well as salts thereof and anhydrides thereof, may be used.

- Alkyl (Meth)acrylate-based Compounds -

Among alkyl (meth)acrylates, one or more types selected from the group that consists of (meth)acrylate-based compounds having straight-chain, branched, or cyclic alkyl groups with 1 to 30 carbon atoms, such as methyl (meth)acrylate, ethyl (meth)acrylate, isopropyl (meth)acrylate, n-butyl (meth)acrylate, i-butyl (meth)acrylate, t-butyl acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, octadecyl (meth)acrylate, dicyclopentanyl (meth)acrylate, nonyl (meth)acrylate, myristyl (meth)acrylate, isobornyl (meth)acrylate, cyclohexyl (meth)acrylate, norbornyl (meth)acrylate, dicyclopentanyl (meth)acrylate, 1-adamantyl (meth)acrylate, 3,3,5-trimethylcyclohexyl acrylate, 4-t-butylcyclohexyl (meth)acrylate, etc., may be used, for example.

- Hydroxyl Group-containing (Meth)acrylate-based Compounds -

Among hydroxyl group-containing (meth)acrylate-based compounds, one or more types selected from the group that consists of 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono (meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-hydroxy-3-allyoxypropyl (meth)acrylate, 2-(meth)acryloyloxyethyl-2-hydroxypropyl phthalate, 2-ethylhexyl EO-modified (meth)acrylate, o-phenylphenol EO-modified acrylate, p-cumylphenol EO-modified (meth)acrylate, nonylphenol EO-modified (meth)acrylate, and other (poly)alkylene glycol-modified (meth)acrylates, etc., may be used, for example.

- Halogen-containing (Meth)acrylate-based Compounds -

Among halogen-containing (meth)acrylate-based compounds, one or more types selected from the group that consists of trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, 2,4,6-tribromophenol-3-EO (ethylene oxide) adduct (meth)acrylate, etc., may be used, for example.

- Ether Group-containing (Meth)acrylate-based Compounds -

Among ether group-containing (meth)acrylate-based compounds, one or more types selected from the group that consists of 1,3-butylene glycol methyl ether (meth)acrylate, methoxytriethylene glycol (meth)acrylate, methoxydipropylene glycol (meth)acrylate, methoxytripropylene glycol (meth)acrylate, methoxypolypropylene glycol (meth)acrylate, ethoxydiethylene glycol (meth)acrylate, ethyl carbitol (meth)acrylate, 2-ethylhexyl carbitol (meth)acrylate, tetrahydrofurfuryl (meth)acrylate, cresylpolyethylene glycol (meth)acrylate, 2-(vinyloxyethoxy)ethyl (meth)acrylate, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (number of EO repeating units being 400, 700, etc.), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl acrylate, ethoxyethoxyethyl (meth)acrylate, butoxyethyl (meth)acrylate, alkoxylated 2-phenoxyethyl (meth)acrylate (ethoxylated 2-phenoxyethyl (meth)acrylate, propoxylated 2-phenoxyethyl (meth)acrylate, etc.), alkoxylated nonylphenyl (meth)acrylate (ethoxylated (4) nonylphenol acrylate, etc.), 2-phenoxyethyl (meth)acrylate, paracumylphenoxyethylene glycol (meth)acrylate, methylphenoxyethyl acrylate, ethoxylated succinic acid (meth)acrylate, ethoxylated tribromophenyl acrylate, ethoxylated nonylphenyl (meth)acrylate, and other alkoxy and/or phenoxy-based (meth)acrylates, etc., may be used, for example.

- Carboxyl Group-containing (Meth)acrylate-based Compounds -

Among carboxyl group-containing (meth)acrylate-based compounds, one or more types selected from the group that consists of β-carboxylethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydro-hydrogen phthalate, 2-(meth)acryloyloxypropyl tetrahydro-hydrogen phthalate, etc., may be used, for example.

- Vinyl Ether Group-containing (Meth)acrylate-based Compounds -

Among vinyl ether group-containing (meth)acrylate-based compounds, one or more types selected from the group that consists of 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethlycyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, 2-(vinyloxyisopropoxyisopropoxy)ethyl (meth)acrylate, etc., may be used, for example.

- Unsaturated Carboxylic Acid Amide-based Compounds -

Among unsaturated carboxylic acid amide-based compounds, one or more types selected from the group that consists of (meth)acrylamide, N-methylol(meth)acrylamide, diacetone (meth)acrylamide, N,N-dimethyl (meth)acrylamide, N,N-diethyl (meth)acrylamide, N-isopropyl (meth)acrylamide, (meth)acryloyl morpholine, N,N-dimethylaminopropyl (meth)acrylamide, N,N-diethylaminopropyl (meth)acrylamide, etc., may be used, for example.

- Other (Meth)acrylate-based Compounds -

Among other (meth)acrylate-based compounds, one or more types selected from the group that consists of benzyl (meth)acrylate, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-l-(meth)acryloxy-3-methacryloxypropane, acryoloxyethyl phthalate, 2-(meth)acryloyloxyethyl-2-hydroxyethyl phthalate, 2-(meth)acryloyloxypropyl phthalate, tricyclodecane monomethylol(meth)acrylate, (meth)acrylic acid dimer, diethylaminoethyl (meth)acrylate, 2-(meth)acryloyloxyethyl succinic acid, 2-(meth)acryloyloxyethyl hexahydro-phthalic acid, 2-ethylhexyl-diglycol (meth)acrylate, aminoethyl (meth)acrylate, ethyl carbitol (meth)acrylate, ethyl diglycol acrylate, quaternary salt of dimethylaminoethyl acrylate benzyl chloride, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid benzoate ester, (2-methyl-2-ethyl-1,3-dioxolan-4-yl)methyl (meth)acrylate, 1-(meth)acryloyl piperidin-2-one, 1,4-dioxaspiro[4,5]deci-2-ylmethyl 2-(meth)acrylate, N-(meth)acryloyloxyethyl hexahydrophthalimide, γ-butyrolactone (meth)acrylate, caprolactone-modified tetrahydro-furfuryl acrylate, imide acrylate, vinyl (meth)acrylate, maleimide, dicyclopentenyloxyethyl (meth)acrylate, etc., may be used, for example.

- N-vinyl-based Compounds -

Among N-vinyl-based compounds, one or more types selected from the group that consists of N-vinyl pyrrolidone, N-vinyl formamide, N-vinyl acetoamide, N-vinyl-2-caprolactam, N-vinyl carbazole, etc., may be used, for example.

- Allylate-based Compounds -

Among allylate-based compounds, one or more types selected from the group that consists of allyl glycidyl ether, diallyl phthalate, triallyl trimellitate, isocyanuric acid triallylate, etc., may be used, for example.

- Other Compounds Having One Ethylenic Unsaturated Bond -

Among "other compounds having one ethylenic unsaturated bond" other than the aforementioned compounds having one ethylenic unsaturated bond, one or more types selected from the group that consists of vinyl acetate, vinyl monochloroacetate, vinyl benzoate, vinyl pivalate, vinyl butylate, vinyl laurate, divinyl adipate, vinyl crotonate, vinyl 2-ethylhexanoate, styrene, vinyl toluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-l-pentene, three-membered ring compounds (such as vinyl cyclopropanes, 1-phenyl-2-vinylcyclopropanes, 2-phenyl-3-vinyloxiranes, 2,3-divinyloxiranes, etc.), cyclic ketene acetals (such as 2-methylene-1,3-dioxepane, podioxolans, 2-methylene-4-phenyl-1,3-dioxepane, 4,7-dimethyl-2-methylene-1,3-dioxepane, 5,6-benzo-2-methylene-1,3-dioxepane, etc.), etc., may be used, for example.

(Compound Having Two Ethylenic Unsaturated Bonds)

For the compound with ethylenic unsaturated bond other than the compound expressed by Formula (1) or Formula (2), any known or commercially available compound having two ethylenic unsaturated bonds may be used without limitation. For example, one or more types selected from the group that consists of (mono, di, tri, tetra or poly)ethylene glycol di(meth)acrylate, polyethylene glycol (100, 400 or 700) di(meth)acrylate, (mono, di, tri, tetra or poly)propylene glycol di(meth)acrylate, cyclohexanedimethanol di(meth)acrylate, dicyclopentanyl di(meth)acrylate, dimethylol octane di(meth)acrylate, dimethylol-tricyclodecane di(meth)acrylate, dimethylol propane di(meth)acrylate, tricyclodecane dimethylol di(meth)acrylate, tris(2-hydroxyethyl) isocyanurate di(meth)acrylate, hydroxypivalic acid neopentyl glycol di(meth)acrylate, polytetramethylene glycol di(meth)acrylate, 1,3- or 1,4-buthylene glycol di(meth)acrylate, 1,4-dimethyl-2,4-pentanediol di(meth)acrylate, 1,5-dimethyl-2,5-hexanediol di(meth)acrylate, 1,5-pentanediol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-, 1,2-, 2,5- or 1,5-hexanediol di(meth)acrylate, 1,7-heptanediol di(meth)acrylate, 1,8- or 1,2-octanediol di(meth)acrylate, 1,9-nonanediol di(meth)acrylate, 1,2- or 1,10-decanediol di(meth)acrylate, 1,12-dodecanediol di(meth)acrylate, 1,2- or 1,14-tetradecanediol di(meth)acrylate, 1,2- or 1,16-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2,4-diethyl-1,5-pentanediol di(meth)acrylate, 2-methyl-1,3-butylene glycol di(meth)acrylate, 2-n-butyl-2-ethyl-1,3-propanediol di(meth)acrylate, tricyclodecane dimethylol dicaprolactonate di(meth)acrylate, dimethylol dicyclopentane di(meth)acrylate, 1,6-hexanediol bis(2-hydroxy-3-(meth)acryloyloxypropyl) ether, bis(4-(meth)acryloxypolyethoxyphenyl) propane, pentaerythritol di(meth)acrylate, pentaerythritol di(meth)acrylate monostearate, pentaerythritol di(meth)acrylate monobenzoate, glycerin di(meth)acrylate, 2-hydroxy-1,3-di(meth)acryloxypropane, diethylene glycol divinyl ether, cyclohexanedimethanol divinyl ether, dipropylene glycol divinyl ether, triethylene glycol divinyl ether, trimethylolpropane divinyl ether, butanediol divinyl ether, propylene glycol divinyl ether, hexanediol divinyl ether, trimethylolpropane diallyl ether, vinyloxyalkyl (meth)acrylate, vinyloxyethoxyethyl (meth)acrylate, N,N'-methylene-bis-acrylamide, bisphenol A di(meth)acrylate, bisphenol F di(meth)acrylate, hydroxypivalyl hydroxypivalate di(meth)acrylate, hydrogenated bisphenol A di(meth)acrylate, hydrogenated bisphenol F di(meth)acrylate, divinyl benzene methylene-bis-acrylamide, ethylene-bis-acrylamide, etc., may be used; however, the selection is not limited to the foregoing.

Also, one or more types selected from the group that consists of alkoxylates (such as ethoxylates, propoxylates, butoxylates, etc.) of compounds having two ethylenic unsaturated bonds, such as ethoxylated 1,6-hexanediol di(meth)acrylate, ethoxylated neopentyl glycol di(meth)acrylate, propoxylated neopentyl glycol di(meth)acrylate, etc., may be used, for example; however, the selection is not limited to the foregoing.

Furthermore, one or more types of an alkylene oxide-modified product (such as ethylene oxide, propylene oxide, etc.) of a compound having two ethylenic unsaturated bonds, such as one or more types selected from the group that consists of ethylene oxide (EO)-modified bisphenol A di(meth)acrylate, propylene oxide (PO)-modified bisphenol A di(meth)acrylate, EO-modified hydrogenated bisphenol A di(meth)acrylate, PO-modified hydrogenated bisphenol A di(meth)acrylate, EO-modified bisphenol F di(meth)acrylate, PO-modified bisphenol F di(meth)acrylate, EO-modified tetrabromobisphenol A di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, EO-modified neopentyl glycol di(meth)acrylate, PO-modified neopentyl glycol di(meth)acrylate, (meth)acrylic acid polyethylene glycol monovinyl ether, (meth)acrylic acid polypropylene glycol monovinyl ether, neopentyl glycol PO (propylene oxide)-modified di(meth)acrylate, and isocyanuric acid EO-modified di(meth)acrylate, or one or more types of a

caprolactone-modified product of a compound having two ethylenic unsaturated bonds, such as one or more types selected form the group that consists of bisphenol A tetraethylene oxide adduct dicaprolactonate di(meth)acrylate, bisphenol F tetraethylene oxide adduct dicaprolactonate di(meth)acrylate, hydroxypivalyl hydroxypivalate dicaprolactonate di(meth)acrylate, and caprolactone adduct di(meth)acrylate of hydroxypivaric acid neopentyl glycol ester, may be used, for example; however, the selection is not limited to the foregoing.

(Compound Having Three Ethylenic Unsaturated Bonds)

For the compound with ethylenic unsaturated bond other than the compound expressed by Formula (1) or Formula (2), any known or commercially available compound having three ethylenic unsaturated bonds may be used. For example, one or more types selected from the group that consists of glycerin tri(meth)acrylate, tetramethylol methane triacrylate, tetramethylol propane tri(meth)acrylate, tris(2-hydroxyethyl)isocyanurate tri(meth)acrylate, trimethylol ethane tri(meth)acrylate, trimethylol octane tri(meth)acrylate, trimethylol propane tri(meth)acrylate, trimethylol propane trivinyl ether, trimethylol hexane tri(meth)acrylate, pentaerythritol tri(meth)acrylate, pentaerythritol triallyl ether, pentaerythritol trivinyl ether, 1,3,5-tri(meth)acryloylhexahydro-s-triazine, dipentaerythritol tri(meth)acrylate tripropionate. isocyanuric acid tri(meth)acrylate, tris(acryloyloxy)phosphate, etc., may be used; however, the selection is not limited to the foregoing. Also, one or more types selected from the group that consists of ethoxylated, propoxylated, butoxylated, or other alkoxylated products, ethylene oxide-, propylene oxide-, or other alkylene oxide-modified products, and caprolactone-modified products, of three functional monomers, such as ethoxylated (1 to 100) trimethylol propane tri(meth)acrylate, propoxylated (1 to 100) trimethylol propane tri(meth)acrylate, glycerin propoxytri(meth)acrylate, trimethylol propane tricaprolactonate tri(meth)acrylate, glycerin PO-modified tri(meth)acrylate, trimethylol propane PO-modified tri(meth)acrylate, isocyanuric acid EO-modified tri(meth)acrylate, isocyanuric acid EO-modified ε-caprolactone-modified tri(meth)acrylate, caprolactone-modified trimethylol propane tri(meth)acrylate, etc., may be used; however, the selection is not limited to the foregoing.

(Compound Having Four or More Ethylenic Unsaturated Bonds)

For the compound with ethylenic unsaturated bond other than the compound expressed by Formula (1) or Formula (2), any known or commercially available compound having four or more ethylenic unsaturated bonds may be used. For example, one or more types selected from the group that consists of compounds having four ethylenic unsaturated bonds, compounds having five ethylenic unsaturated bonds, compounds having six ethylenic unsaturated bonds, and compounds having seven or more ethylenic unsaturated bonds, may be used. For example, one or more types selected from the group that consists of diglycerin tetra(meth)acrylate, ditrimethylol ethane tetra(meth)acrylate, ditrimethylol octane tetra(meth)acrylate, ditrimethylol butane tetra(meth)acrylate, ditrimethylol propane tetra(meth)acrylate, ditrimethylol propane tetracaprolactonate tetra(meth)acrylate, ditrimethylol hexane tetra(meth)acrylate, trimethylol propane tetra(meth)acrylate, pentaerythritol tetra(meth)acrylate, pentaerythritol tetraallyl ether, pentaerythritol tetracaprolactonate tetra(meth)acrylate, pentaerythritol tetravinyl ether, dipentaerythritol tetra(meth)acrylate, tetramethylol methane tetra(meth)acrylate, oligoester tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol polyalkylene oxide hepta(meth)acrylate, tripentaerythritol octa(meth)acrylate, etc., may be used; however, the selection is not limited to the foregoing. Also, one or more types selected from the group that consists of ethoxylated, propoxylated, butoxylated, or other alkoxylated products, ethylene oxide-, propylene oxide-, or other alkylene oxide-modified products, and caprolactone-modified products, of four or more functional monomers, such as ethylene oxide-modified pentaerythritol tetra(meth)acrylate, ethoxylated pentaerythritol tetra(meth)acrylate, etc., may be used; however, the selection is not limited to the foregoing.

(Epoxylated Plant Oil (Meth)acrylate Compound)

For the compound with ethylenic unsaturated bond other than the compound expressed by Formula (1) or Formula (2), any known or commercially available epoxylated plant oil (meth)acrylate compound may be used. Epoxylated plant oil (meth)acrylates are derived from plant oils and thus can increase the biomass component quantity in the active energy ray-curable composition.

Epoxylated plant oil (meth)acrylates are obtained by (meth)acrylic-modifying epoxylated plant oils, and one or more types selected from compounds that are each obtained by ring-opening-addition-polymerizing a (meth)acrylic acid with the epoxy group of an epoxylated plant oil produced by epoxylating the double bond of an unsaturated plant oil with peracetic acid, peroxybenzoic acid, or other oxidizing agent, may be used, for example.

Unsaturated plant oils are triglycerides whose at least one fatty acid has at least one carbon-carbon unsaturated bond, and one or more types selected from the group that consists of hempseed oil, flaxseed oil, perilla oil, oiticica oil,

olive oil, cacao oil, kapok oil, kaya oil, mustard oil, apricot kernel oil, tung oil, kukui oil, walnut oil, poppy oil, sesame oil, safflower oil, daikon seed oil, soybean oil, chaulmoogra oil, camellia oil, corn oil, tall oil, canola oil, niger oil, bran oil, palm oil, castor oil, sunflower oil, grapeseed oil, almond oil, pineseed oil, cottonseed oil, coconut oil, peanut oil, dehydrated castor oil, etc., may be used.

(Oligomer or Polymer)

For the compound with ethylenic unsaturated bond other than the compound expressed by Formula (1) or Formula (2), any known or commercially available polymer or oligomer with ethylenic unsaturated bond may be used. Among polymers or oligomers with ethylenic unsaturated bond, those having one or more ethylenic unsaturated bonds of one or more types selected from the group that consists of (meth)acryloyl groups, vinyl groups, etc., may be used. For example, one of more types selected from the group that consists of polydiallyl phthalate, neopentyl glycol oligo(meth)acrylate, 1,4-butanediol oligo(meth)acrylate, 1,6-hexanediol oligo(meth)acrylate, trimethylol propane oligo(meth)acrylate, pentaerythritol oligo(meth)acrylate, urethane (meth)acrylate, epoxy(meth)acrylate, polyester (meth)acrylate, epoxy(meth)acrylate, rosin-modified epoxy(meth)acrylate, unsaturated polyesters, polyether (meth)acrylate, acrylic-based resins having unreacted unsaturated groups, unsaturated polyethers, unsaturated polyamides, unsaturated polyurethanes, acrylic-modified phenol-based resins, acrylated amine compound oligomers, etc., may be used.

(Commercial Product)

Among commercial products of the compound with ethylenic unsaturated bond other than the compound expressed by Formula (1) or Formula (2), one or more types selected from the group that consists of the "Light Acrylate," "Light Ester," "Epoxy Ester," "Urethane Acrylate," and "High-functional Oligomer" series manufactured by Kyoeisha Chemical Co., Ltd., "NK Ester" and "NK Oligo" series manufactured by Shin-Nakamura Chemical Co., Ltd., "Fancryl" series manufactured by Hitachi Chemical Co., Ltd., "Aronix" series manufactured by Toagosei Co., Ltd., "Functional Monomer" series manufactured by Daihachi Chemical Industry Co., Ltd., "Special Acrylic Monomer" series manufactured by Osaka Organic Chemical Industry Ltd., "Acryester" and "Diabeam Oligomer" series manufactured by Mitsubishi Chemical Corporation, "Kayarad" and "Kayamer" series manufactured by Nippon Kayaku Co., Ltd., "(Meth)acrylic Acid/Methacrylic Acid Ester Monomer" series manufactured by Nippon Shokubai Co., Ltd., "Nichigo-UV Shikoh Urethane Acrylate Ligomer" series manufactured by Nippon Synthetic Chemical Industry Co., Ltd., "Carboxylic Acid Vinyl Ester Monomer" series manufactured by Japan Vam & Poval Co., Ltd., "Functional Monomer" series manufactured by Kohjin Film & Chemicals Co., Ltd., "EBECRYL," "ACA," "KRM," "IRR," "RDX," and "OTA" series manufactured by Daicel-Allnex Ltd., "CN" and "SR" series manufactured by Arkema S.A., "Laromer" series manufactured by BASF SE, "Photomer" series manufactured by Cognis Corporation, "Art Resin" series manufactured by Negami Chemical Industrial Co., Ltd., "Blemmer" series manufactured by NOF Corporation, "New Frontier" series manufactured by DKS Co., Ltd., "Miramer" series manufactured by Miwon Specialty Chemical Co., Ltd., "AgiSyn" series manufactured by DSM-Agi Corporation, etc., may be used, for example; however, the selection is not limited to the foregoing.

(Content)

If the active energy ray-curable composition contains a compound with ethylenic unsaturated bond other than what is expressed by Formula (1) or Formula (2), it is contained by a quantity equivalent to 0 to 90% by mass, or preferably 0 to 70% by mass, in the active energy ray-curable composition. It should be noted that, if a polymer with ethylenic unsaturated bond is used as a compound with ethylenic unsaturated bond other than what is expressed by Formula (1) or Formula (2), it is contained by a quantity equivalent to 0 to 30% by mass, or preferably 1 to 20% by mass, in the active energy ray-curable composition. By adjusting its content as described above, appropriate viscoelasticity can be added to the active energy ray-curable composition to prevent occurrence of misting, etc., and also to ensure curability, so that the resulting ink or ink composition can achieve both curability and printability.

<Colorant >

For the colorant, any known or commercially available colorant may be used without limitation according to the desired tone of color, concealing property, etc., to be added to the active energy ray-curable composition. For example, a colorant having red, blue, yellow, green, purple, black, white, orange, brown, metallic, or any other tone of color may be used.

The colorant may be, for example, a pigment (inorganic coloring pigment, organic coloring pigment, glitter pigment, fluorescent pigment, etc.), colored resin grains, dye, etc., in powder, dispersion liquid, or solution form, and one or more types of colorant may be used to achieve a desired tone of color.

Preferably no dye should be used as the colorant if lightfastness, etc., is required. Grains constituting the pigment, colored resin grains, etc., may be surface-treated with a rosin-based compound, silane coupling agent, resin, pigment derivative or other surface treatment agent, or remain untreated.

Also, a self-dispersing pigment, or preferably ionic self-dispersing pigment, or more preferably anionically charged self-dispersing pigment, which has at least one type of hydrophilic or lipophilic groups bonded to the pigment surface directly or through various atom groups, may be used.

As for the particle size, any such pigment or colored resin grains having an appropriate particle size from the viewpoints of desired tone of color, transparency, concealing property, coefficient of absorption of visible light, etc., may be used. For example, excellent transparency can be achieved by using a pigment whose average primary particle size has been controlled with a known dispersion device (such as bead mill, sand mill, kneader, double roll mill, triple roll mill, etc.) to a level small enough for the wavelengths of visible light (0.01 to 0.3 μm, especially 0.01 to 0.1 μm).

Among inorganic coloring pigments, one or more types selected from the group that consists of titanium oxide, Chinese white, zinc sulfide, lead white, calcium carbonate, precipitated barium sulfate, white carbon, alumina white, kaolin clay, talc, bentonite, aluminum hydroxide, black iron oxide, carbon black, graphite, red iron oxide, molybdenum red, molybdate orange, chrome vermillion, chrome yellow, yellow iron oxide, titanium yellow, viridian, Victorian green, ultramarine blue, Prussian blue, cobalt blue, cerulean blue, cobalt silica blue, cobalt zinc silica blue, manganese violet, cobalt violet, etc., may be used, for example; however, the selection is not limited to the foregoing.

Among organic coloring pigments, one or more types selected from the group that consists of phthalocyanine-based (such as copper phthalocyanine-, halogenated copper phthalocyanine- or metal-free phthalocyanine-based), threne-based, azo-based (such as azo-, disazo- or polyazo-based), quinacridone-based, anthraquinone-based (such as aminoanthraquinone, diaminodianthraquinone, anthrapyrimidine, flavanthrone, anthanthrone, indanthrone, pyranthrone, or violanthrone, and the like), dioxane-based, indigo-based, thioindigo-based, perinone-based, perylene-based, indreline-based, azomethine-based, isoindolinone-based, isoindoline-based, dioxazine-based, thioindigo-based, quinophthalone-based, metal complex-based, diketopyrrolopyrrole-based, polycyclic, benzimidazolone-based, anthrapyrimidine-based, nitro-based, nitroso-based, aniline black, flavanthrone-based, quinophthalone-based, pyranthrone-based, indanthrone-based, and dye lake-based organic coloring pigments, etc., may be used, for example; however, the selection is not limited to the foregoing.

Among glitter pigments, aluminum, bronze, and other metal powders and foils, titanium dioxide-coated mica and other oxide-coated micas, oxide-coated glass flakes, fish scale foils, bismuth oxychloride, and other pigments having pearly luster or interference luster may be used.

Among fluorescent pigments, pigments that use ultraviolet ray, infrared ray or other light of specific wavelength as the excitation energy and emit light in a wavelength range different from the wavelength of the excitation light, may be used.

Colored resin grains are fine grains based on a mixture of one or more types selected from the group that consists of the aforementioned inorganic coloring pigments, organic coloring pigments, glitter pigments, dyes, and fluorescent pigments, with a resin, where a polyolefin-based resin, polystyrene-based resin, acrylic-based resin, urethane-based resin, polyester-based resin, polyamide-based resin, etc., may be used as the resin.

Specific examples of these inorganic coloring pigments and organic coloring pigments that can be used for the active energy ray-curable composition are listed below for each representative hue.

Among red pigments, one or more types selected from the group that consists of C. I. Pigment Red 5, 7, 9, 12, 14, 19, 22, 38, 41, 48:1, 48:2, 48:3, 48:4, 49:1, 53:1, 57, 57:1, 63:1, 81:1, 81:2, 81:3, 97, 101, 102, 112, 122, 123, 144, 146, 149, 168, 177, 178, 179, 180, 184, 185, 187, 190, 192, 200, 202, 208, 209, 210, 215, 216, 217, 220, 223, 224, 226, 227, 228, 240, 242, 246, 254, 255, 264, 270, 272, etc., may be used, for example; however, the selection is not limited to the foregoing.

Among yellow pigments, one or more types selected from the group that consists of C. I. Pigment Yellow 1, 2, 3, 4, 5, 6, 10, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 75, 77, 81, 83, 86, 87, 93, 94, 95, 97, 98, 100, 101, 104, 106, 108, 109, 110, 113, 114, 115, 116, 117, 118, 119, 120, 123, 125, 126, 127, 128, 129, 137, 138, 139, 147, 148, 150, 151, 152, 153, 154, 155, 156, 161, 162, 164, 166, 167, 168, 169, 170, 171, 172, 173, 174, 175, 176, 177, 179, 180, 181, 182, 184, 185, 187, 188, 193, 194, 199, 213, etc., may be used, for example; however, the selection is not limited to the foregoing.

Among orange pigments, one or more types selected from the group that consists of C. I. Pigment Orange 36, 43, 51, 55, 59, 61, etc., may be used, for example; however, the selection is not limited to the foregoing.

Among green pigments, one or more types selected from the group that consists of C. I. Pigment Green 7, 10, 36, 37 etc., may be used, for example; however, the selection is not limited to the foregoing.

Among blue pigments, one or more types selected from the group that consists of C. I. Pigment Blue 1, 2, 3, 15, 15:1, 15:2, 15:3, 15:4, 15:6, 16, 18, 22, 27, 29, 60, 64, etc., may be used, for example; however, the selection is not limited to the foregoing.

Among purple pigments, one or more types selected from the group that consists of C. I. Pigment Violet 1, 19,

23, 27, 29, 30, 32, 37, 40, 42, 50, etc., may be used, for example; however, the selection is not limited to the foregoing.

Among black pigments, one or more types selected from the group that consists of C. I. Pigment Black 1, 6, 7, 12, 20, 31, etc., may be used, for example; however, the selection is not limited to the foregoing.

Among dyes, one or more types selected from the group that consists of watersoluble dyes, oil-soluble dyes, dispersible dyes, etc., may be used, for example, which may comprise one or more types selected from the group that consists of acid dyes, direct dyes, basic dyes, reactive dyes, and edible dyes.

Among dyes, one or more types selected from the group that consists of azo-based dyes, anthraquinone-based dyes, phthalocyanine-based dyes, quinoneimine-based dyes, quinoline-based dyes, nitro-based dyes, carbonyl-based dyes, methin-based dyes, etc., may be used, for example; however, the selection is not limited to the foregoing.

If the active energy ray-curable composition contains a colorant, it may be contained by a quantity equivalent to 1 to 60% by mass in the active energy ray-curable composition. Adjusting the content of the colorant this way prevents the quality of images produced by the ink comprising the active energy ray-curable composition from dropping, or its viscometric property from being negatively affected, on the obtained printed matter.

<Resin>

For the resin, any known or commercially available resin may be used without limitation according to the properties to be added to the active energy ray-curable composition, especially appropriate viscoelasticity property, and printing properties when it constitutes an ink composition, for example. For example, one or more types selected from the group that consists of acrylic-based resin, polyester-based resin, styrene-based resin, polyolefin-based resin, epoxy-based resin, polyurethane-based resin, phenol-based resin, rosin-based resin, block polymer, graft polymer (core-shell polymer), acrylic-modified phenol-based resin, rosin-modified phenol-based resin, rosin-modified maleic acid-based resin, rosin-modified alkyd-based resin, rosin-modified petroleum-based resin, rosin ester-based resin, fatty acid-modified rosin-based resin, petroleum-based resin-modified phenol-based resin, alkyd-based resin, plant oil-modified alkyd-based resin, petroleum-based resin, hydrocarbon-based resin (polybutene, polybutadiene, etc.), fluororesin (tetrafluoroethylene (PTFE) resin wax, etc.), etc., may be used. Particularly preferably one or more types selected from the group that consists of acrylic-based resin (acrylic acid ester-styrene copolymer-based resin, etc.), styrene-based resin (styrene-acrylic acid ester copolymer-based resin, etc.), rosin-modified phenol-based resin, rosin-modified maleic acid-based resin, rosin-modified alkyd-based resin, rosin ester-based resin, fatty acid-modified rosin-based resin, alkyd-based resin, and plant oil-modified alkyd-based resin may be used.

Preferably the weight-average molecular weight of the resin is 500 to 300,000.

Also, preferably its acid value is 1 to 100 mgKOH/g from the viewpoint of achieving quick drying property when irradiated with the active energy ray.

Use of a fatty acid-modified rosin-based resin or rosin-modified alkyd resin as the resin allows for improvement of biomass proportion and other properties. Preferably such active energy ray-curable composition is used as a printing ink composition, especially active energy ray-curable offset printing ink composition.

A fatty acid-modified rosin-based resin results from reacting a fatty acid-modified material and a rosin-based resin.

For the fatty acid-modified material, one or more types selected from the group that consists of decanoic acid, lauric acid, myristic acid, octanoic acid, palmitic acid, stearic acid, oleic acid, linoleic acid, linolenic acid, ricinoleic acid, eleostearic acid, acetic acid, fumaric acid, maleic acid, maleic acid anhydride, itaconic acid, citraconic acid, citraconic acid anhydride, maleic acid anhydride, acrylic acid, methacrylic acid, and other natural or synthetic fatty acids with 2 to 30 or so carbon atoms; tung oil, soybean oil, flaxseed oil, castor oil, sunflower oil, safflower oil, corn oil, cottonseed oil, rice oil (rice bran oil), canola oil, canola oil, perilla oil, sesame oil, camellia oil, olive oil, peanut oil, grapeseed oil, coconut oil, tall oil, palm oil, palm kernel oil, beef fat, horse oil, pig fat, chicken oil, fish oil from sardine, saury, etc., whale oil, shark oil, lanoline, mink oil, bees wax, and other animal and plant-based oils; derivatives of the foregoing animal and plant-based oils (oxidization-polymerized oil (boiled oil)/thermopolymerized oil (stand oil), dehydrated, esterified, or other modified products of animal and plant-based oils), etc., may be used, for example. Preferably coconut oil or other oil with an iodine value of 80 or higher is used, where use of one or more types selected from coconut oil, tung oil, soybean oil, tall oil, flaxseed oil, castor oil, safflower oil, perilla oil, polymerized soybean oil, polymerized flaxseed oil, polymerized castor oil, polymerized tung oil, polymerized and dehydrated castor oil, dehydrated castor oil, soybean oil butyl ester, flaxseed oil butyl ester, tung oil butyl ester, etc., is particularly preferred.

For the rosin-based resin, one or more types selected from the group that consists of wood rosin, gum rosin, tall rosin, and other unmodified rosins, polymerized rosin, disproportionated rosin, stabilized rosin, and hydrogenated rosin obtained by modifying any such unmodified rosin by means of polymerization, disproportionation, stabilization, hydrogenation, etc., chemically modified rosin based on introduction of various functional groups, etc., rosin ester-based resin, rosin alcohol-based resin, rosin-based resin metal salt, etc., may be used, for example. Preferably one or more types selected from unmodified rosin, polymerized rosin ester, rosin ester, disproportionated rosin, and rosin-based

resin metal salt are used, where use of one or more types selected from unmodified rosin, polymerized rosin ester, and rosin-based resin metal salt is particularly preferred.

The weight-average molecular weight of the rosin-based resin, although not limited in any way, is normally in a range of 1,000 to 2,000,00, or preferably in a range of 10,000 to 150,000, or most preferably in a range of 15,000 to 100,000.

In the case of a fatty acid-modified rosin-based resin, the fatty acid modification quantity (fatty acid introduction quantity) is normally 5 to 50% by mass, or preferably 10 to 40% by mass, or most preferably 10 to 20% by mass, in the fatty acid-modified rosin-based resin. When this quantity is under 5% by mass, the fatty acid modification effect is not sufficient and the curability of coating film may drop; if it exceeds 50% by mass, on the other hand, the properties of the rosin-based resin will deteriorate and the curability of coating film may drop.

A rosin-modified alkyd resin is obtained by reacting an acid component containing resin acid, fatty acid, and polybasic acid with a polyalcohol, and its solubility parameter sp value by the turbid point titration method is 9.0 to 11.0 $(cal/cm^3)^{1/2}$ while its acid value is 1 to 50 mgKOH/g.

Here, the solubility parameter sp value by the turbid point titration method is measured by turbid point titration which is a simple measurement method, and represents the value calculated according to K. W. Suh and J. M. Corbett's formula below. Refer to J. Appl. Polym. Sci. 1968, 12, 2359 for the calculation of the sp value.

$$\text{Formula: sp value} = (V_{ml}^{1/2} \bullet \delta_H + V_{mh}^{1/2} \bullet \delta_D)/(V_{ml}^{1/2} + V_{mh}^{1/2})$$

To be specific, 0.5 g of the sample is dissolved in 10 mL of toluene or 10 mL of trimethylol propane triacrylate (TMPTA), each representing a good solvent, to which n-hexane representing a poor solvent of low-sp value is added until the turbid point where a titer H (mL) reading is made, and similarly ethanol representing a poor solvent of high sp value is added to such toluene solution until the turbid point where a titer D (mL) reading is made, after which these values are applied to the formula below to calculate $V_{ml}$, $V_{mh}$, $\delta_H$, and $\delta_D$ that are then assigned to the calculation formula for sp value to obtain the sp value.

It should be noted that the molecular volume and sp value of each solvent used in turbid point titration are as follows:

Molecular volume of good solvent $\phi_0$
Toluene: 106.28 mL/mol
TMPTA: 279.55 mL/mol
Molecular volume of poor solvent of low sp value $\phi_1$
n-hexane: 131.61 mL/mol
Molecular volume of poor solvent of high sp value $\phi_h$
Ethanol: 58.39 mL/mol
sp value of each solvent
Toluene: 9.14, TMPTA: 9.88,
n-hexane: 7.28, Ethanol: 12.58

$$V_{ml} = (\phi_0 \bullet \phi_l)/\{(1-V_H) \bullet \phi_l + V_H \bullet \phi_0\}$$

$$V_{mh} = (\phi_0 \bullet \phi_h)/\{(1-V_D) \bullet \phi_h + V_D \bullet \phi_0\}$$

$$V_H = H/(M+H)$$

$$V_D = D/(M+D)$$

$$\delta_H = (\delta_0 \bullet M)/(M+H) + (\delta_l \bullet H)/(M+H)$$

$$\delta_D = (\delta_0 \bullet M)/(M+D) + (\delta_l \bullet D)/(M+D)$$

$\delta_0$: sp value of the good solvent
$\delta_1$: sp value of the poor solvent of low sp value
$\delta_h$: sp value of the poor solvent of high sp value
H: Titer of the poor solvent of low sp value (mL)
D: Titer of the poor solvent of high sp value (mL)
M: Quantity of the good solvent (mL)
$V_H$: Volume fraction of the titer of the poor solvent of low sp value (%)
$V_D$: Volume fraction of the titer of the poor solvent of high sp value (%)

For the resin acid to be used when obtaining a rosin-modified alkyd resin, one or more types selected from the group that consists of rosins, abietic acids, and derivatives thereof, may be used, for example.

Rosins and derivatives thereof are nonvolatile components of pine resin collected from Pinaceae plants, and their primary component is resin acid. Multiple types of rosins and derivatives thereof are known based on different manufacturing methods, postprocessing modifications, etc., and any of these may be used. For example, one or more types selected from the group that consists of gun rosin, wood rosin, tall rosin, disproportionated rosin, hydrogenated rosin, polymerized rosin, etc., may be used.

Among abietic acids and derivatives thereof, one or more types selected from the group that consists of abietic acid, neoabietic acid, palustric acid, pimaric acid, isopimaric acid, dehydroabietic acid, and derivatives thereof, etc., obtained by isomerizing compounds of these acids and then Diels-Alder-reacting the resulting isomers with maleic acid, etc., to introduce carboxyl groups to the abietic acid, may be used, for example.

By using resin acid, pigment affinity can be improved, while the biomass proportion of the rosin-modified alkyd resin can also be increased.

For the fatty acid to be used when obtaining a rosin-modified alkyd resin, one or more types selected from the group that consists of fatty acids obtained by hydrolyzing natural fats and oils such as plant oils and animal oils, may be used, for example.

For the fatty acid to be used when obtaining a rosin-modified alkyd resin, one or more types selected from the group that consists of caprylic acid, pelargonic acid, capric acid, lauric acid, myristic acid, pentadecylic acid, palmitic acid, margaric acid, stearic acid, oleic acid, linoleic acid, arachidic acid, behenic acid, etc., may be used, for example. Among these fatty acids, use of those that have 8 to 16 carbon atoms, or preferably 8 to 14 carbon atoms, is preferred from the viewpoint of the sp value.

Also, among fatty acids, use of those from coconut oil or palm kernel oil rich in fatty acids having 12 to 14 carbon atoms is preferred.

Among polybasic acids, compounds having two or more carboxyl groups traditionally used in alkyd resin synthesis may be used without limitation. For example, one or more types selected from the group that consists of phthalic acid anhydride, isophthalic acid, terephthalic acid, adipic acid, trimellitic acid, 1,2-cyclohexanedicarboxylic acid, 1,3-cyclohexenedicarboxylic acid, 1,4-cyclohexenedicarboxylic acid, hexahydrophthalic acid anhydride, 5-sodium sulfoisophthalic acid, fumaric acid, benzoic acid, tert-butylbenzoic acid, tetrahydrophthalic acid anhydride, maleic acid anhydride, succinic acid, succinic acid anhydride, fumaric acid, sebacic acid, azelaic acid, tetrabromophthalic acid anhydride, methylhymic acid anhydride, tetrachlorophthalic acid anhydride, hexahydrophthalic acid anhydride, pyromellitic acid anhydride, trimellitic acid anhydride, methylcyclohexenedicarboxylic acid anhydride, etc., may be used.

Among polyalcohols, compounds having two or more hydroxyl groups traditionally used in alkyd resin synthesis may be used without limitation. For example, one or more types selected from the group that consists of ethylene glycol, 1,3-propanediol, 1,2-propanediol, 1,4-butanediol, diethylene glycol, triethylene glycol, polyethylene glycol, dipropylene glycol, 1,3-butanediol, neopentyl glycol, spiroglycol, dioxane glycol, adamantanediol, 3-methyl-1,5-pentanediol, methyloctanediol, 1,6-hexanediol, 1,4-cyclohexanedimethanol, 2-methylpropanediol 1,3,3-methylpentanediol 1,5-hexamethylene glycol, octylene glycol, 9-nonanediol, 2,4-diethyl-1,5-pentanediol, bisphenol A ethylene oxide adduct and other bifunctional phenol alkylene oxide-modified compounds, ethylene oxide/propylene oxide copolymer-based polyether polyol, polycarbonate diol, adamantanediol, polyether diol, polyester diol, polycaprolactone diol, etc., may be used.

By using a rosin-modified alkyd resin whose solubility parameter sp value by the turbid point titration method is 9.0 to 11.0 $(cal/cm^3)^{1/2}$, the active energy ray-curable composition can have good compatibility. The solubility parameter sp value by the turbid point titration method, of the rosin-modified alkyd resin, is preferably 9.3 to 10.0 $(cal/cm^3)^{1/2}$, or more preferably 9.5 to 10.0 $(cal/cm^3)^{1/2}$.

The acid value of the rosin-modified alkyd resin is 1 to 50 mgKOH/g, as an acid value of 50 mgKOH or lower prevents abnormal emulsification and other problems from occurring in the active energy ray-curable composition. The acid value is preferably 1 to 25 mgKOH, or more preferably 1 to 10 mgKOH.

Preferably the weight-average molecular weight of the rosin-modified alkyd resin is 1,000 to 70,000. When this weight-average molecular weight is 1,000 or higher, excellent pigment dispersibility is ensured and good viscoelasticity can be added to the ink composition, which is desired; a weight-average molecular weight of 70,000 or lower, on the

other hand, leads to good solubility and excellent handling, which is desired.

Rosin-modified alkyd resins can achieve good compatibility in the active energy ray-curable composition while increasing the content of biomass-derived components, and because of the excellent pigment affinity of the resin acid skeletons in their molecules, they can also achieve good pigment dispersibility and improved surface gloss.

A rosin-modified alkyd resin is prepared by reacting an acid component containing resin acid, fatty acid, and polybasic acid with a polyalcohol, which can be done using any of various known methods.

For example, one method is to heat, in an inert gas ambience by adding a solvent, catalyst, etc., a reaction vessel in which an acid component containing resin acid, fatty acid, and polybasic acid, and a polyalcohol, have been placed, to perform condensation polymerization while removing condensation water. Other methods include, for example, one whereby a plant oil and/or fatty acid ester thereof and a polyalcohol are put through ester exchange reaction to prepare a reaction intermediate, and then this reaction intermediate is reacted with a resin acid or derivative thereof, and one whereby a plant oil and/or fatty acid ester thereof and a resin acid or derivative thereof are put through ester exchange reaction to prepare a reaction intermediate, and subsequently this reaction intermediate is condensation-polymerized with a polyalcohol.

If the active energy ray-curable composition contains a resin component, the content of the resin component in the active energy ray-curable composition may be set to 1 to 30% by mass, or preferably 1 to 20% by mass, or more preferably 1 to 10% by mass. By keeping the content of the resin component in these ranges, appropriate viscoelasticity can be added to the active energy ray-curable composition while preventing misting, etc., from occurring, thereby ensuring good curability.

<Component Satisfying Condition (A)>

The component satisfying Condition (A) is a component that contains a compound with no ethylenic unsaturated bond and of 9.0 $(cal/cm^3)^{1/2}$ or higher but under 11.0 $(cal/cm^3)^{1/2}$ in sp value, and is liquid at normal temperature. "No ethylenic unsaturated bond" means groups having a property to quickly polymerize in the presence of radicals, such as acryloyl groups, methacryloyl groups, vinyl groups, etc., are not present. Also, the sp value is a solubility parameter defined by the turbid point titration method, as explained in <Resin>. "Liquid at normal temperature" means liquid at the temperatures of the environments in which ink compositions are stored and printed, and under the present invention, it means liquid at least between 0 and 50°C.

Because the sp value is 9.0 $(cal/cm^3)^{1/2}$ or higher but under 11.0 $(cal/cm^3)^{1/2}$, the compatibility problem associated with high-polarity compounds with ethylenic unsaturated bond that are generally used in active energy ray-curable compositions can be solved, and furthermore the fact that a lot of the biomass used is of nonedible type, the biomass proportion of the active energy ray-curable composition can be increased without causing starvation problems. Additionally, because there is no ethylenic unsaturated bond, quick polymerization is prevented in the presence of radicals, which means that the active energy ray-curable composition remains fluid even while the compounds, etc., with ethylenic unsaturated bond contained in the active energy ray-curable composition undergo polymerization in the presence of radicals when irradiated with the active energy ray, which is likely to contribute to improved leveling of the cured product surface.

The component satisfying Condition (A) only needs to be free of ethylenic unsaturated bond and have an sp value in the described range, so an animal and plant-derived fat and oil or modified product of animal and plant-derived fat and oil may be used, for example. Among animal and plant-derived fats and oils, one or more types selected from the group that consists of cashew-nut shell liquid, tall oil, castor oil, coconut oil, palm kernel oil, etc., may be used, for example.

Cashew-nut shell liquid is an oily liquid contained in cashew-nut shells, obtained as a biproduct after edible fruits are collected from natural cashew nuts, and it contains alkenyl-substituted phenols such as anacardic acid, cardol, 2-methylcardol, cardanol, etc.

Among these, cardanol and cardol are compounds having an aromatic ring to which a hydroxyl groups and a straight-chain hydrocarbon are bonded, 2-methylcardanol is a compound having a cardanol aromatic ring to which a methyl group is bonded, and anacardic acid is a compound having a cardanol aromatic ring to which a carboxyl group is bonded, where all have a straight-chain alkenyl group with 15 to 18 carbon atoms containing one to three unsaturated bonds in the chain. Cashew-nut shell liquids of various grades, determined by the purity, color, odor, etc., of cardanol, are commercially available. For example, one or more types selected from the group that consists of Cardolite (registered trademark) NX-2021, NX-2022, NX-2023D, NX-2023, Ultra LITE 2023, NX-2024, NX-2025, NX-2026, etc., manufactured by Cardolite Corporation, and CNSL, LB-7000, LB-7250, etc., manufactured by Tohoku Chemical Industries, Ltd., may be used.

Among modified products of animal and plant-derived fats and oils, where the modified products only need to have an sp in the described range, one or more types selected from the group that consists of castor oil, coconut oil, palm kernel oil and other fatty acid esters, hardened castor oil, polymerized castor oil, unsaturated animal and plant oils

or epoxylated products thereof, polymerized products of cashew-nut shell liquid, modified derivatives of cashew-nut shell liquid, etc., may be used, for example.

Among unsaturated animal and plant oils or epoxylated products thereof, one or more types selected from the group that consists of unsaturated animal and plant oils or unsaturated animal and plant oils whose at least one unsaturated group has been modified to an epoxy group, such as esters, etc., of a triglyceride with epoxy group or fatty acid with epoxy group and an alcohol component having 1 to 14 carbon atoms (such as glycerin, methanol, ethanol, propanol, isopropanol, 2-ethylhexyanol, etc.), may be used, for example.

Among epoxylated products of unsaturated animal and plant oils, any known substances or commercial products may be used; for example, one or more types selected from the group that consists of epoxylated products of soybean oil, corn oil, sunflower oil, flaxseed oil, canola oil, canola oil, safflower oil, tall oil, tung oil, fish oil, beef fat, castor oil, and other animal and plant oils, epoxylated methyl stearate, epoxylated butyl stearate, epoxylated 2-ethylhexyl stearate, epoxylated stearyl stearate, 3,4-epoxycyclohexylmethyl-3,4-epoxycyclohexane carboxylate epoxylated soybean oil, epoxylated propylene glycol dioleate, epoxylated palm oil, epoxylated fatty acid methyl ester, etc., may be used. Among these, use of epoxylated tall oil and/or epoxylated soybean oil is preferred.

Among polymerized products of cashew-nut shell liquid, formaldehyde-condensed products of Cardolite NC-547 manufactured by Cardolite Corporation or other commercially available cashew-nut shell liquids and/or modified derivatives thereof, may be used, for example.

Among modified derivatives of cashew-nut shell liquid, where any known substances or commercial products may be used, one or more types selected from the group that consists of, for example, those obtained by introducing various types of groups to the phenolic hydroxyl groups of the alkenyl-substituted phenols contained in cashew-nut shell liquid, those obtained by introducing various types of substituent groups to the unsaturated bonds of alkenyl groups, or those obtained by oxidizing and epoxylating the unsaturated bonds of alkenyl groups, may be used, for example.

These are commercially available as Cardolite LITE2020, NC-513, NC-514, etc., manufactured by Cardolite Corporation, for example.

Preferably the component satisfying Condition (A) is a nonedible fat and oil or modified product thereof. Here, "nonedible fat and oil" refers to any general fat and oil not for human consumption, and particularly use of a fat and oil obtained from a substance not for human consumption is preferred. It should be noted that a nonedible fat and oil whose sp value is under 9.0 $(cal/cm^3)^{1/2}$ but which can be epoxylated or otherwise chemically modified into a modified product whose sp value is 9.0 $(cal/cm^3)^{1/2}$ or higher, may be used as the component satisfying Condition (A).

In particular, preferably the component satisfying Condition (A) comprises one or more types selected from the group that consists of castor oil, tall oil, cashew-nut shell oil and modified products thereof, etc.

The component satisfying Condition (A) is contained in the active energy ray-curable composition by 1 to 20% by mass, or preferably 1 to 15% by mass, for example, in consideration of the compatibility with the compounds with various types of ethylenic unsaturated bonds contained in the active energy ray-curable composition, as well as the biomass proportion, leveling after printing or application, etc., required of the active energy ray-curable composition. Additionally, if both the component satisfying Condition (A) and component satisfying Condition (B) are contained, the mixing ratio of the two, although not limited in any way, may be set to a ratio by mass (Component satisfying Condition (A)/Component Satisfying Condition (B)) between 1/99 and 99/1. If the content of the component satisfying Condition (A) deviates from this range, the compatibility with the compounds with various types of ethylenic unsaturated bonds contained in the active energy ray-curable composition, as well as the biomass proportion, leveling after printing or application, etc., required of the active energy ray-curable composition, tend to worsen, for example.

<Component Satisfying Condition (B)>

The component satisfying Condition (B) is a component that contains a compound with no ethylenic unsaturated bond and of under 9.0 $(cal/cm^3)^{1/2}$ in sp value, and is liquid at normal temperature. The meanings of "no ethylenic unsaturated bond," "sp value" and "liquid at normal temperature" are as explained in <Component Satisfying Condition (A)>. The lower limit of sp value is preferably 7.5 $(cal/cm^3)^{1/2}$, or more preferably 8.0 $(cal/cm^3)^{1/2}$.

For the component satisfying Condition (B), one or more types selected from the group that consists of hempseed oil, flaxseed oil, perilla oil, oiticica oil, olive oil, cacao oil, kapok oil, kaya oil, mustard oil, apricot kernel oil, tung oil, kukui oil, walnut oil, poppy oil, sesame oil, safflower oil, daikon seed oil, soybean oil, chaulmoogra oil, camellia oil, corn oil, canola oil, niger oil, bran oil, palm oil, sunflower oil, grapeseed oil, almond oil, pine seed oil, cottonseed oil, peanut oil, dehydrated castor oil, peanut oil, refined avocado oil, kukui nut oil, grapeseed oil, sweet almond oil, corn germ oil, pistachio nut oil, hazelnut oil, macadamia nut oil, meadowfoam oil, rose hip oil, and modified products thereof (fatty acid esters, thermopolymerized oils thereof, oxygen-injection-polymerized oils thereof, etc.) etc., may be used, for example. Among these, plant oils are preferred, and use of one or more types selected from soybean oil, tall oil and dehydrated castor oil is particularly preferred.

The component satisfying Condition (B) has no ethylenic unsaturated bond and thus has no property to quickly

polymerize in the presence of radicals. This means that, when the active energy ray-curable composition is used as an ink composition, for example, the component satisfying Condition (B) keeps the ink composition fluid while the components of compounds, etc., with ethylenic unsaturated bond polymerize in the ink composition after printing due to the presence of radicals, resulting in improved leveling and manifestation of high gloss.

If the active energy ray-curable composition contains the component satisfying Condition (B), it may be contained by a quality equivalent to 1 to 20% by mass in the active energy ray-curable composition. Additionally, if both the component satisfying Condition (A) and component satisfying Condition (B) are contained, the mixing ratio of the two, although not limited in any way, may be set to a ratio by mass (Component satisfying Condition (A)/Component Satisfying Condition (B)) between 1/99 and 99/1. If the content of the component satisfying Condition (B) deviates from this range, the compatibility with the compounds with various types of ethylenic unsaturated bonds contained in the active energy ray-curable composition, as well as the biomass proportion, leveling after printing or application, etc., required of the active energy ray-curable composition, tend to worsen, for example.

<Compound with Ethylenic Unsaturated Bond Having Amino and/or Amide Group>

For the compound with ethylenic unsaturated bond having an amino and/or amide group, preferably a compound having an amino and/or amide group in its molecule along with a vinyl and/or (meth)acryloyloxy group which is a group with ethylenic unsaturated bond, especially a vinylamide-based compound and/or acryloylamine-based compound, is used, for example.

Among compounds with ethylenic unsaturated bond having an amino and/or amide group, one or more types selected from the group that consists of N-vinylformamide, N-vinylacetoamide, acryloylmorpholine, N-vinylpyrrolidone, N-vinyl-2-caprolactam, N-vinylcarbazole, acrylamide, N,N-dimethylaminoethyl (meth)acrylate, N,N-dimethylaminopropyl (meth)acrylate, morpholinoethyl (meth)acrylate, acrylamide, N-methylolacrylamide, diacetone acrylamide, N,N-dimethylacrylamide, N,N-diethylacrylamide, N-isopropylacrylamide, N,N-dimethylaminopropylacrylamide, N,N-diethylaminopropylacrylamide, methylene-bis-acrylamide, ethylene-bis-acrylamide, etc., may be used, for example. Preferably one or more types selected from the group that consists of N-vinylformamide, N-vinylacetoamide, acryloylmorpholine, N,N-diethylacrylamide, N-vinylpyrrolidone, and N-vinyl-2-caprolactam may be used.

If the active energy ray-curable composition contains a compound with ethylenic unsaturated bond having an amino and/or amide group, its content may be determined as deemed appropriate according to the purpose of use of the active energy ray-curable composition, and the like; for example, it may be contained by a quantity equivalent to 5 to 60% by mass in the active energy ray-curable composition. If the content of the compound with ethylenic unsaturated bond having an amino and/or amide group deviates from the range of 5 to 60% by mass and the active energy ray-curable composition is made into an active energy ray-curable composition inkjet printing ink composition, the curability of the ink composition tends to worsen when the content is lower than 5% by mass, while its discharge stability tends to worsen when the content is higher than 60% by mass.

<Compound Having Two Active Energy Ray-curable Functional Groups and Two Amino Groups in Its Molecule>

For the compound having two active energy ray-curable functional groups and two amino groups in its molecule, any compound that has two active energy ray-curable functional groups and two amino groups in its molecule may be used without limitation.

Among active energy ray-curable functional groups, photopolymerizable functional groups that can form crosslinking intermolecular bonds by undergoing polymerization reaction under visible light, or under ultraviolet ray, electron beams, or other invisible light containing ionizing radiation, are preferred, which may be either narrowly-defined photopolymerizable functional groups that undergo photopolymerization reaction by being directly activated by photo-irradiation, or broadly-defined photopolymerizable functional groups whose polymerization reactionwhen the photopolymerizable functional groups are photo-irradiated in the presence of a photopolymerization initiator-- is initiated and accelerated by the action of the active species generated by the photopolymerization initiator.

The active energy ray-curable functional groups may be, for example, ethylenic double bonds, etc., having radical photopolymerization reactivity, and epoxy groups or other cyclic ether groups, etc., having cationic or anionic photopolymerization reactivity, for example.

Preferred active energy ray-curable functional groups are (meth)acryloyl groups, vinyl groups, allyl groups, and other ethylenic unsaturated bonds, where (meth)acryloyl groups are more preferred, and even more preferred is when the two active energy ray-curable functional groups are both (meth)acryloyl groups. The two active energy ray-curable functional groups may be the same or different.

The amino groups may be primary amino groups, secondary amino groups, or tertiary amino groups, and the two amino groups may be the same or different.

The amine value of the compound having two active energy ray-curable functional groups and two amino groups

in its molecule is 100 to 200 KOHmg/g, or preferably 120 to 150 KOHmg/g, or more preferably 130 to 142 KOHmg/g.

It should be noted that "amine value" refers to an amine value per 1 g of solids content, representing an equivalent potassium hydroxide value measured by the potentiometric titration method (with COMTITE (AUTO TITRATOR COM-900, BURET B-900, TITSTATION K-900) manufactured by Hiranuma Sangyo Co., Ltd.) using a 0. IN aqueous solution of hydrochloric acid.

The compound having two active energy ray-curable functional groups and two amino groups in its molecule may be a compound having two photopolymerizable functional groups and two amino groups in its molecule (such as an acrylated amine compound (acrylated amine synergist), etc.), for example, where an acrylated amine compound obtained by reacting a bifunctional (meth)acrylate with an amine compound is preferred.

Among bifunctional (meth)acrylates, one or more types selected from the group that consists of 1,4-butanediol di(meth)acrylate, 1,6-hexanediol di(meth)acrylate, 1,9-nonanediol di(meth)acrylate, propylene glycol di(meth)acrylate, 1,3-butylene glycol di(meth)acrylate, neopentyl glycol di(meth)acrylate, and other alkylene glycol di(meth)acrylates, di(meth)acrylate of ethylene oxide adduct of bisphenol A, di(meth)acrylate of ethylene oxide adduct of bisphenol F, di(meth)acrylate of ethylene oxide adduct of bisphenol S, di(meth)acrylate of ethylene oxide adduct of thiobisphenol, di(meth)acrylate of ethylene oxide adduct of brominated bisphenol A and other bisphenol alkylene oxide adduct di(meth)acrylates, polyethylene glycol di(meth)acrylate, polypropylene glycol di(meth)acrylate and other polyalkylene glycol di(meth)acrylates, di(meth)acrylate of hydroxypivalic acid neopentyl glycol ester, polymers having a carboxyl group and two (meth)acrylate groups, etc., may be used, for example. Of these, 1,6-hexanediol di(meth)acrylate is preferred.

Among amine compounds, one or more types selected from the group that consists of benzylamine, phenethylamine, ethylamine, n-propylamine, isopropylamine, n-butylamine, isobutylamine, n-pentylamine, isopentylamine, n-hexylamine, cyclohexylamine, n-heptylamine, n-octylamine, 2-ethylhexylamine, n-nonylamine, n-decylamine, n-dodecylamine, n-tetradecylamine, n-hexadecylamine, n-octadecylamine and other monofunctional amine compounds, diethylenetriamine, triethylenetetramine, tetraethylenepentamine, 1,6-hexamethylenediamine, 1,8-octamethylenediamine, 1,12-dodecamethylenediamine, o-phenylenediamine, p-phenylenediamine, m-phenylenediamine, o-xylylenediamine, p-xylylenediamine, m-xylylenediamine, menthanediamine, bis(4-amino-3-methylcyclohexylno methane, isophoronediamine, 1,3-diaminocyclohexane, spiro-acetal-based diamine, ethyleneimine, and other cyclic amine compounds, polyethyleneimine, polyvinylamine, polyallylamine, and other polyfunctional amine compounds, may be used, for example.

Of these, acrylated amine compounds obtained by reacting 1,6-hexanediol di(meth)acrylate with an amine compound are preferred. Among such acrylated amine compounds, one or more types selected from CN371 (product name, manufactured by Arkema S.A.), EBECRYL 7100 (product name, manufactured by Daicel-Allnex Ltd.), etc., may be used, for example.

If the active energy ray-curable composition contains a compound having two active energy ray-curable functional groups and two amino groups in its molecule, its content may be determined as deemed appropriate according to the purpose of use of the active energy ray-curable composition and the like; for example, the content may be 0 to 15% by mass in the active energy ray-curable composition. Use of a compound having two active energy ray-curable functional groups and two amino groups in its molecule, especially acrylated amine compound, improves curability and also ensures high adhesion to sheets based on polyvinyl chloride, etc. When the content of the compound having two active energy ray-curable functional groups and two amino groups in its molecule is within this range and the active energy ray-curable composition is made into an inkjet printing ink, the ink will have improved curability and can also achieve high adhesion to sheets based on polyvinyl chloride, etc. It should be noted that, if a compound with ethylenic unsaturated bond having an amino and/or amide group is used, a compound having two active energy ray-curable functional groups and two amino groups in its molecule need not be used.

<Plant Oil-modified Polyfunctional (Polyester) Oligomer>

For the plant oil-modified polyfunctional (polyester) oligomer, any polyester oligomer that has been modified with a plant oil and has two or more, or preferably two to six, (meth)acrylate groups in its molecule, may be used without limitation. This increases the biomass proportion of the active energy ray-curable flexographic printing ink composition, which is desired.

The plant oil used to modify the polyester oligomer is a term including one of various types of fatty acid esters contained in plant oils or fatty acids, etc., obtained by hydrolyzing these various types of fatty acid esters. For the plant oil, soybean oil, canola oil, sunflower oil, tall oil, corn oil, etc., may be used. Among these, preferably tall oil, which is nonedible, is used as the plant oil for modification.

For the plant oil-modified polyfunctional (polyester) oligomer, a hexafunctional plant-derived modified (polyester) oligomer having six (meth)acrylate groups in its molecule is preferred and, for example, preferably one or more types selected from the group that consists of, for example, EBECRYL 450, 452 (product names, manufactured by Daicel-Allnex Ltd.) and AgiSyn 716 (product name, manufactured by DSM-Agi Corporation) which is a hexafunctional polyester acrylate modified with tall oil fatty acid, are used.

If the active energy ray-curable composition contains a plant oil-modified polyfunctional (polyester) oligomer, its content may be determined as deemed appropriate according to the purpose of use of the active energy ray-curable composition, and the like; for example, it may be 20.0 to 70.0% by mass in the active energy ray-curable composition. When the content of the plant oil-modified polyfunctional (polyester) oligomer is within this range and the active energy ray-curable composition is made into a flexographic printing ink, an active energy ray-curable flexographic printing ink composition offering excellent adhesion and rub resistance as well as high biomass proportion can be obtained.

<(Meth)acrylamide-based Compound>

For the (meth)acrylamide-based compound, any compound having one or more (meth)acrylamide groups in its molecule may be used without limitation.

Among (meth)acrylamide-based compounds, one or more types selected from the group that consists of (meth)acrylamide, N-methylol(meth)acrylamide, diacetone (meth)acrylamide, N,N-dimethyl(meth)acrylamide, N,N-diethyl(meth)acrylamide, N-isopropyl(meth)acrylamide, (meth)acryloylmorpholine, N,N-dimethylaminopropyl(meth)acrylamide, N,N-diethylaminopropyl(meth)acrylamide, methylene-bis-acrylamide, ethylene-bis-acrylamide, etc., may be used, for example.

If the active energy ray-curable composition contains a (meth)acrylamide-based compound, its content may be determined as deemed appropriate according to the purpose of use of the active energy ray-curable composition, and the like; for example, it may be 20 to 45% by mass in the active energy ray-curable composition. When the active energy ray-curable composition is made into a flexographic printing ink and the content of the (meth)acrylamide-based compound is under 20% by mass, the curability of the ink may drop or tackiness may worsen; if the content exceeds 45% by mass, on the other hand, the rub resistance, scratch resistance, etc., of the ink may drop.

<Other Components>

The active energy ray-curable composition proposed by the present invention may contain "other components" that can be mixed into the active energy ray-curable composition other than the one or more types of compound expressed by Formula (1) and/or Formula (2), compound with ethylenic unsaturated bond other than the compound expressed by Formula (1) or Formula (2), colorant, resin, component satisfying Condition (A) or Condition (B), compound with ethylenic unsaturated bond having an amino and/or amide group, compound having two active energy ray-curable functional groups and two amino groups in its molecule, plant oil-modified polyfunctional (polyester) oligomer, and acrylamide-based compound.

For such "other components," any known substances or commercial products that can add desired functions, properties, etc., to the active energy ray-curable composition may be used without limitation; for example, one or more types selected from the group that consists of polymerization initiator, polymerization inhibitor, solvent, surfactant, dispersant, filler (extender pigment), sensitizer, pH adjusting agent, humectant, antioxidant, oxygen scavenger, reducing agent, fading inhibitor, halation inhibitor, fluorescent whitening agent, plasticizer, flame retardant, foaming agent, antistatic agent, magnetic body, storage stabilizer, surface tension adjuster, slipping agent, anti-blocking agent, photostabilizer, leveling agent, defoaming agent, UV absorbent, infrared-absorbing agent, thickening agent (thixotropy agent), antibacterial/antifungal agent, etc., may be used; however, the selection is not limited to the foregoing.

(Polymerization Initiator)

The active energy ray-curable composition may contain any known or commercially available polymerization initiator.

The polymerization initiator is not limited in any way so long as it can generate radical or other active species when irradiated with an active energy ray to cause the active energy ray-curable composition to start polymerizing; for example, one or more types selected from the group that consists of redox initiator, thermopolymerization initiator and photopolymerization initiator may be used.

A redox initiator demonstrates polymerization initiation function through an oxidation-reduction reaction under mild conditions based on a combination of a peroxide and a reducing agent.

A thermopolymerization initiator or photopolymerization initiator each demonstrates polymerization initiation function by generating radicals when heated or irradiated with an active energy ray (infrared ray, ultraviolet ray, etc.).

While any polymerization initiator may be selected as deemed appropriate according to the purpose of use, objective, etc., and normally use of a photopolymerization initiator is preferred, a redox initiator having relatively low toxicity may be used, instead of a thermopolymerization initiator or photopolymerization initiator having high potential

toxicity, when toxicity must be considered.

Among these, preferably a radical photopolymerization initiator having light absorbing properties across wavelengths of 450 to 300 nm and capable of manifesting a function to initiate curing reaction (radical polymerization) under light of wavelengths in this range, is used, as it can achieve a good curability under ultraviolet ray from a light-emitting diode (LED) light source.

Among radical photopolymerization initiators, one or more types selected from the group that consists of acylphosphine oxide-based compounds, triazine-based compounds, aromatic ketone-based compounds, aromatic onium salt-based compounds, organic peroxides, thioxanthone-based compounds, thiophenyl-based compounds, anthracene-based compounds, hexaaryl-biimidazole-based compounds, ketone oxime ester-based compounds, borate-based compounds, azinium-based compounds, metallocene-based compounds, active ester-based compounds, halogenated hydrocarbon-based compounds, alkylamine-based compounds, iodonium salt-based compounds, sulfonium salt-based compounds, etc., may be used, for example.

Among acylphosphine oxide-based compounds, one or more types selected from the group that consists of 2,4,6-trimethylbenzoyl-diphenyl-phosphine oxide, bis(2,4,6-trimethylbenzoyl)-phenylphosphine oxide, etc., may be used, for example.

Among triazine-based initiators, one or more types selected from the group that consists of 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-pipenyl-4,6-bis(trichloromethyl)-s-triazine, 2,4-bis(trichloromethyl)-6-styryl-s-triazine, 2-(naphtho-1-yl)-4,6-bis(trichloromethyl)-s-triazine, 2-(4-methoxy-naphtho-1-yl)-4,6-bis(trichloromethyl)-s-triazine, 2,4-trichloromethyl-(piperonyl)-6-triazine, 2,4-trichloromethyl(4'-methoxystyryl)-6-triazine, etc., may be used, for example.

Also, one or more types selected from the group that consists of benzophenone, diethylthioxanthone, 2-methyl-1-(4-methylthio)phenyl-2-morpholinopropane-1-one, 4-benzoyl-4'-methyldiphenyl sulfide, 1-chloro-4-propoxythioxanthone, isopropylthioxanthone, 2-hydroxy-2-methyl-1-phenylpropane-1-one, 1-hydroxycyclohexylphenylketone, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2-benzyl-2-dimethylamino-1-(morpholinophenyl)-butane-1-one, etc., may be used.

These polymerization initiators are commercially available and, for example, IRGACURE 907, 369, 184, 379, 819, etc., manufactured by BASF SE, TPO, DETX, etc., manufactured by Lamberti S.P.A., TAZ-204, etc., manufactured by Midori Kagaku Co., Ltd., may be used.

Also, in order to promote the curability under ultraviolet ray from a light-emitting diode (LED) light source, a photosensitizer having light absorbing properties primarily in the UV wavelength band of 400 nm and longer and manifesting a function to sensitize curing reaction under light of wavelengths in this range, such as an anthracene-based compound, thioxanthone-based compound, etc., or preferably a thioxanthone-based compound, may be used in combination with a polymerization initiator having light absorbing properties across wavelengths of 450 to 300 nm and manifesting an initiator function for curing reaction (radical polymerization) under light of wavelengths in this range.

If the active energy ray-curable composition contains a polymerization initiator, its content may be determined as deemed appropriate according to the components in the active energy ray-curable composition, and the like; for example, it may be contained by 0.1 to 25% by mass, or preferably 0.1 to 15% by mass, or more preferably 1 to 15% by mass, in the active energy ray-curable composition. Keeping the content of the photopolymerization initiator in the ink composition to this range ensures sufficient curability with good internal curability, and cost, of the ink composition at the same time, which is desired.

Also, if a photosensitizer is combined that has light absorbing properties primarily in the UV wavelength band of 400 nm and longer and manifests a function to sensitize curing reaction under light of wavelengths in this range, preferably its content is kept to a range of 0 to 3% by mass in the active energy ray-curable composition, because a content exceeding 3% by mass represents over-adding that does not improve the effects.

(Polymerization Inhibitor)

The active energy ray-curable composition may contain any known or commercially available polymerization inhibitor for the purpose of preventing polymerization during storage. For example, one or more types selected from the group that consists of p-methoxyphenol, catechol, tert-butylcatechol, butylhydroxytoluene, and other phenol-based compounds, hydroquinone, alkyl-substituted hydroquinone, and other quinone-based compounds, phenothiazine, tocopherol acetate, nitrosamine-based compounds, benzotriazole, and other triazole-based compounds, hindered amine-based compounds, octyl maleate, and other carboxylic acid alkyl ester-based compounds, etc., may be used.

If the active energy ray-curable composition contains a polymerization inhibitor, its content may be determined as deemed appropriate according to the components in the active energy ray-curable composition, and the like; for example, it may be 0.01 to 1% by mass in the active energy ray-curable composition.

(Organic Solvent)

The active energy ray-curable composition may contain any known or commercially available solvent to lower viscosity and improve wettability/spreadability over the base material, and the like. For example, one or more types selected from the group that consists of water, glycol monoacetates, glycol diacetates, glycol ethers, lactic acid esters, etc., may be used. Among these, use of one or more types selected from the group that consists of water, tetraethylene glycol dialkyl ether, ethylene glycol monobutyl ether acetate, and diethyl diglycol is preferred.

If the active energy ray-curable composition contains a solvent, its content may be determined as deemed appropriate according to the components in, and purpose of use of, the active energy ray-curable composition, and the like; for example, it may be 0.1 to 50% by mass in the active energy ray-curable composition.

(Surfactant)

The active energy ray-curable composition may contain one or more types of surfactant selected from the group that consists of known or commercially available nonionic surfactants, anionic surfactants, cationic surfactants and amphoteric surfactants to improve the defoamability, dispersibility of each component, and discharge stability when made into an active energy ray-curable composition, and the like. For example, one or more types selected from the group that consists of silicon-based surfactants (such as polyether-modified silicon oil, polyester-modified polydimethylsiloxane, polyester-modified methylalkylpolysiloxane, etc.), fluorine-based surfactants, oxyalkylene ether-based surfactants, acetylene glycol-based surfactants, phosphorus-based surfactants, sulfonic acid-based surfactants, etc., may be used.

If the active energy ray-curable composition contains a surfactant, its content may be determined as deemed appropriate according to the components in, and purpose of use of, the active energy ray-curable composition, and the like; for example, it may be 0.005 to 1% by mass in the active energy ray-curable composition.

(Dispersant)

The active energy ray-curable composition may contain any known or commercially available dispersant to improve the dispersibility and preservation stability of pigments, etc. For example, one or more types selected from the group that consists of the surfactants mentioned in (Surfactant), pigment derivatives, and polymer dispersants (such as carbodiimide-based, polyester-based, polyamine-based, polyesteramine-based, polyurethane-based and fatty acid amine-based dispersants, polyacrylate-based, polycaprolactone-based, polysiloxane-based, multi-chain polymer nonionic-based and polymer ionic-based dispersants, etc.), and the like, may be used.

If the active energy ray-curable composition contains a dispersant, its content may be determined as deemed appropriate according to the components in, and purpose of use of, the active energy ray-curable composition, and the like; for example, it may be 0.01 to 5% by mass in the active energy ray-curable composition.

(Filler (Extender Pigment))

The active energy ray-curable composition may contain any known or commercially available filler (extender pigment). For example, one or more types selected from the group that consists of talc, mica, barium sulfate, magnesium sulfate, clay, calcium carbonate, kaolinite (kaolin), silicon oxide, bentonite, ground calcium carbonate, barium carbonate, zirconia, alumina, titanium oxide, etc., may be used.

The filler (extender pigment) may be in powder form, or in dispersion liquid form meaning that it is dispersed in an appropriate solvent, and any filler (extender pigment) whose average particle size is 0.001 to 100 $\mu$m, or preferably 0.01 to 50 $\mu$m, or more preferably 0.05 to 5 $\mu$m, and whose BET specific surface area is 1 to 350 $m^2$/g, or preferably 10 to 70 $m^2$/g, or more preferably 20 to 50 $m^2$/g, may be used.

If the active energy ray-curable composition contains a filler (extender pigment), its content may be determined as deemed appropriate according to the components in, and purpose of use of, the active energy ray-curable composition, and the like; for example, it may be 1 to 30% by mass in the active energy ray-curable composition.

(Wax)

The active energy ray-curable composition may contain any wax whose average particle size is 8.0 $\mu$m or smaller. This way, when the active energy ray-curable composition is made into a component of a flexographic printing ink composition, the scratch resistance of the ink coating film can be improved. For example, beeswax, lanoline wax, whale wax, candelilla wax, carnauba wax, rice wax, sumac wax, jojoba oil, and other animal and plant-based waxes, montan wax, ozocerite, ceresin, paraffin wax, microcrystalline wax, petrolatum, and other mineral- or petroleum-based

waxes, Fischer-Tropsch wax, polyethylene wax, oxidized polyethylene wax, oxidized polypropylene wax and other synthetic hydrocarbon-based waxes, montan wax derivative, paraffin wax derivative, microcrystalline wax derivative and other modified waxes, hardened castor oil, hardened castor oil derivative, and other hydrogenated waxes, polytetrafluoroethylene wax, etc., may be used. The average particle size of the wax is 8.0 μm or smaller, or preferably 6.0 μm or smaller, or more preferably 4.0 μm or smaller, or yet more preferably 2.0 μm or smaller. An average particle size of 2.0 μm or smaller leads to better scratch resistance. Also, any average particle size may be selected for the wax to be used, as deemed appropriate, according to the viscosity of the active energy ray-curable flexographic printing ink composition or anilox line count of the flexographic printing machine.

If the active energy ray-curable composition contains a wax, its content may be determined as deemed appropriate according to the components in, and purpose of use of, the active energy ray-curable composition, and the like; for example, it may be in a range of 0.5 to 5.0% by mass, or preferably in a range of 1.5 to 4.5% by mass, in the active energy ray-curable composition.

If the wax content is lower than 0.5% by mass, the scratch resistance tends to drop; if it is higher than 5.0% by mass, on the other hand, the workability tends to drop because the turn rolls get soiled, etc.

(Surface-Adjusting Agent)

The active energy ray-curable composition may contain any known or commercially available surface-adjusting agent. For example, one or more types selected from the group that consists of silicon-based surface-adjusting agents, fluorine-based surface-adjusting agents, acrylic-based surface-adjusting agents, acetylene glycol-based surface-adjusting agents, etc., may be used. As for specific examples, one or more types selected from the group that consists of the BYK series manufactured by BYK-Chemie GmbH, TEGO series manufactured by Evonik Degussa Japan Co., Ltd., Polyflow series manufactured by Kyoeisha Chemical Co., Ltd., etc., may be used.

If the active energy ray-curable composition contains a surface-adjusting agent, its content may be determined as deemed appropriate according to the components in, and purpose of use of, the active energy ray-curable composition, and the like; for example, it may be 0.01 to 1% by mass in the active energy ray-curable composition.

[Method for Manufacturing]

The method for manufacturing the active energy ray-curable composition proposed by the present invention is not limited in any way, and any known method may be used without limitation. For example, it may be prepared by adding all of the components with which to constitute the active energy ray-curable composition and then mixing them in a bead mill, sand mill, kneader, double roll mill, triple roll mill, etc.

It may also be prepared by mixing the pigment, pigment dispersant, and various active energy ray-curable compounds to obtain a concentrated base beforehand, and then adding active energy ray-curable compounds, polymerization initiator, and if necessary, surfactant and other additives, to the concentrated base to achieve a desired composition.

In addition, it may also be prepared by mixing some of the components with which to constitute the active energy ray-curable composition and then kneading them in a bead mill, sand mill, kneader, double roll mill, triple roll mill, etc., to disperse the pigment (i.e., coloring component and extender pigment), followed by adding of additives (polymerization initiator, polymerization inhibitor, wax and other additives, etc.) as necessary, and further by viscosity adjustment through addition of active energy ray-curable compounds and components satisfying Condition (A) or Condition (B).

The viscosity of the active energy ray-curable composition proposed by the present invention is adjusted as deemed appropriate according to the purpose of use, etc.

If the composition is used as an active energy ray-curable offset printing ink composition, for example, preferably its viscosity at 25°C by a Laray viscometer is 10 to 70 Pa•s.

If the composition is used as an active energy ray-curable inkjet printing ink composition, for example, preferably its viscosity measured by a type-E viscometer (product name: RE100L viscometer, manufactured by Toki Sangyo Co., Ltd.) under the conditions of 25°C and 50 rpm is 100 mPa•s or lower.

If the composition is used as an active energy ray-curable flexographic printing ink composition, for example, preferably its viscosity at 25°C is 300 to 2000 mPa•s.

[Purpose of Use]

The active energy ray-curable composition proposed by the present invention may be applied to various purposes of use.

Such purposes of use include, for example, polymerized or crosslinked forming resin, cast resin, fiber-reinforced

material, 3D modeling resin, stereolithography resin, sealant, dental polymerized resin, printing ink, printing varnish, paint, printing plate photosensitive resin, printing color proof, color filter resist, black matrix resist, liquid crystal photospacer, rear projection screen material, optical fiber, plasma display rib material, dry film resist, PCB resist, solder resist, semiconductor photoresist, microelectronics resist, micromachine component manufacturing resist, etching resist, microlens array, insulating material, hologram material, optical switch, waveguide material, overcoat, powder coat, adhesive, pressure-sensitive adhesive, mold release agent, optical recording medium, adhesive/pressure-sensitive adhesive, peelable coat, microcapsule-based image recording material composition, various devices, etc.

As it exhibits good film forming properties when printed or applied on various base materials, preferably the active energy ray-curable composition proposed by the present invention is used specifically as a printing ink (printing ink). As for the method of printing the active energy ray-curable composition proposed by the present invention when it is used as a printing ink (printing ink), any known method may be used, such as offset printing, inkjet printing, flexographic printing, or gravure printing, for example.

The base material on which to print or apply the active energy ray-curable composition proposed by the present invention may be selected as deemed appropriate from the group that consists of glass, plastic, metal, ceramic, paper, fabric, capsule, gel, etc., or it may be a laminate or other composite base material comprising multiple of these base materials.

The base material may have a flat shape such as sheet, film, or paper, or a three-dimensional shape such as capsule or molded product, and it may be transparent or opaque.

As for plastic base materials on which to print or apply the active energy ray-curable composition proposed by the present invention, among the aforementioned base materials, one or more types selected from the group that consists of polyester-based polymers (such as polyethylene terephthalate (PET), polyethylene naphthalate, etc.), cellulose-based polymers (such as diacetyl cellulose, triacetyl cellulose (TAC), etc.), polycarbonate-based polymers, polyacrylic-based polymers (such as polymethylmethacrylate, etc.), vinyl chloride-based polymers, polyolefin-based polymers (such as polyethylene, polypropylene, polyolefin polymers having a cyclic or norbornene structure, ethylene-propylene copolymers, etc.), polyamide-based polymers (such as nylon, aromatic polyamide polymers, etc.), polystyrene-based polymers (such as polystyrene, acrylonitrile-styrene copolymers, etc.), polyimide-based polymers, polysulfone-based polymers, polyether sulfone-based polymers, polyether ketone-based polymers, polyphenyl sulfide-based polymers, polyvinyl alcohol-based polymers, polyvinylidene chloride-based polymers, polyvinyl butyral-based polymers, polyarylate-based polymers, polyoxymethylene-based polymers, polyepoxy-based polymers, blends of these polymers, etc., may be used.

To use the active energy ray-curable composition proposed by the present invention, the active energy ray-curable composition is printed or applied on the base material, after which ultraviolet ray or other active energy ray is irradiated thereon, for example. This allows the active energy ray-curable composition on the base material (printing medium) to cure quickly.

The methods for printing or applying the active energy ray-curable composition proposed by the present invention on the base material include, for example, inkjet method, blade coating method, gravure coating method, gravure offset coating method, bar coating method, roll coating method, knife coating method, air-knife coating method, comma coating method, U-comma coating method, AKKU coating method, smoothing coating method, microgravure coating method, reverse roll coating method, quadruple or quintuple roll coating method, dip coating method, curtain coating method, slide coating method, die coating method, spray coating method, etc.

[Active Energy Ray-curable Offset Printing Ink Composition]

The active energy ray-curable offset printing ink composition contains the aforementioned active energy ray-curable composition containing one or more types of compound expressed by Formula (1) and/or Formula (2). It may further contain one or more of compound with ethylenic unsaturated bond other than the compound expressed by Formula (1) or Formula (2), colorant, resin, and component satisfying Condition (A) or Condition (B). The viscosity of the active energy ray-curable offset printing ink composition is in a range of 10 to 70 Pa•s, or preferably in a range of 15 to 60 Pa•s.

For the compound with ethylenic unsaturated bond other than the compound expressed by Formula (1) or Formula (2) in the active energy ray-curable offset printing ink composition, preferably one or more types selected from the group that consists of methyl (meth)acrylate, butyl (meth)acrylate, hexyl (meth)acrylate, octyl (meth)acrylate, dodecyl (meth)acrylate, isobornyl (meth)acrylate, cyclohexyl (meth)acrylate, and other alkyl alkylates, (meth)acrylic acid, (meth)acrylic acid ethylene oxide adduct, (meth)acrylic acid propylene oxide adduct, styrene, epoxylated plant oil acrylate, hexanediol diacrylate, trimethylolpropane triacrylate, glycerin propoxytriacrylate, ditrimethylolpropane tetraacrylate, dipentaerythritol hexaacrylate, polydiallyl phthalate, etc., are used, for example.

For the component satisfying Condition (A) or Condition (B) in the active energy ray-curable offset printing ink composition, preferably one or more types selected from the group that consists of cashew-nut shell oil, modified derivatives of cashew-nut shell oil, epoxylated plant oils and plant oils, are used, for example.

In the active energy ray-curable offset printing ink composition, preferably a polymerization initiator is used, and more preferably one or more types selected from photopolymerization initiators (methylhydroquinone, 4,4'-diethylaminobenzophenon (EAB), 4'-(methylthio)-α-morpholino-α-methylpropiophenone (IRGACURE 907), etc.) are used, for example. It should be noted that, from the viewpoint of the environment, etc., a polymerization initiator need not be used and preferably it should not be used in the case of electron beam irradiation.

In the active energy ray-curable offset printing ink composition, preferably carbon black or other coloring pigment, as well as alkyl-substituted hydroquinone or other polymerization inhibitor, are used. Furthermore, one or more types selected from the group that consists of the components listed in <Other Components>, such as solvent, surfactant, dispersant, filler (extender pigment), sensitizer, pH adjusting agent, humectant, antioxidant, oxygen scavenger, reducing agent, fading inhibitor, halation inhibitor, fluorescent whitening agent, plasticizer, flame retardant, foaming agent, antistatic agent, magnetic body, storage stabilizer, surface tension adjuster, slipping agent, anti-blocking agent, photostabilizer, leveling agent, defoaming agent, UV absorbent, infrared-absorbing agent, thickening agent (thixotropy agent), antibacterial/antifungal agent, etc., may be used, for example; however, the selection is not limited to the foregoing.

The compositional makeup of the active energy ray-curable offset printing ink composition may be as follows, for example: 0.1 to 50% by mass, or preferably 5 to 50% by mass, of one or more types of compound expressed by Formula (1) and/or Formula (2); 0 to 70% by mass, or preferably 0 to 60% by mass, or more preferably 1 to 50% by mass, of a compound with ethylenic unsaturated bond other than the compound expressed by Formula (1) or Formula (2); 0 to 30% by mass, or preferably 1 to 30% by mass, of a colorant; 0 to 30% by mass of a resin; 1 to 40% by mass, or preferably 1 to 20% by mass, of a component satisfying Condition (A) and/or Condition (B); 0.1 to 25% by mass, or preferably 1 to 20% by mass, of a polymerization initiator; 0 to 33% by mass of an extender pigment; and 0.1 to 3% by mass, or preferably 0.2 to 1% by mass, of a polymerization inhibitor.

The active energy ray-curable offset printing ink composition may be printed on the aforementioned base materials using any standard offset planographic printing technology. Here, the offset planographic printing technology to be used may be a water-based printing method using dampening water, or a water-free printing method where printing is performed without dampening water by using dedicate planographic printing plates.

Irradiating an active energy ray on an undried printed matter produced by offset planographic printing allows the ink composition present on the surface of the printing paper to cure due to the irradiation of the active energy ray, which means that a dried printed matter can be obtained instantly. While electron beam, ultraviolet ray, or other known active energy ray may be adopted as the active energy ray, use of ultraviolet ray is preferred from the viewpoints of installation cost, ease of operation, etc.

The active energy ray-curable offset printing ink composition not only provides beautiful printed matters with high gloss that convey information and serve as objects of appreciation, but it can also be used for packaging and other applications.

[Active Energy Ray-curable Inkjet Printing Ink Composition]

The active energy ray-curable inkjet printing ink composition proposed by the present invention contains the aforementioned active energy ray-curable composition containing one or more types of compound expressed by Formula (1) and/or Formula (2). It may further contain one or more of compound with ethylenic unsaturated bond other than the compound expressed by Formula (1) or Formula (2), colorant, resin, compound with ethylenic unsaturated bond having an amino and/or amide group, and compound having two active energy ray-curable functional groups and two amino groups in its molecule. The viscosity of the active energy ray-curable inkjet printing ink composition is in a range of 100 mPa•s or lower, or preferably in a range of 70 mPa•s or lower.

For the compound with ethylenic unsaturated bond other than the compound expressed by Formula (1) or Formula (2) in the active energy ray-curable inkjet printing ink composition, preferably one or more types selected from the group that consists of methyl (meth)acrylate, butyl (meth)acrylate, hexyl (meth)acrylate, octyl (meth)acrylate, dodecyl (meth)acrylate, lauryl (meth)acrylate, isodecyl (meth)acrylate, isobornyl (meth)acrylate, cyclohexyl (meth)acrylate, 3,3,5-trimethylcyclohexyl (meth)acrylate and other alkyl alkylates, (meth)acrylic acid, (meth)acrylic acid ethylene oxide adduct, (meth)acrylic acid propylene oxide adduct, phenoxyethyl (meth)acrylate, benzyl (meth)acrylate, 1,6-hexanediol mono(meth)acrylate, ethyl carbitol (meth)acrylate, tetrahydrofurfuryl (meth)acrylate, phenoxyethyl (meth)acrylate, vinyloxyethoxyethyl (meth)acrylate, styrene, epoxylated plant oil acrylate, hexanediol diacrylate, polyethylene glycol (1 to 400) di(meth)acrylate, dipropylene glycol di(meth)acrylate, 1,6-hexanediol di(meth)acrylate, propoxylated neopentyl glycol di(meth)acrylate, trimethylolpropane tri(meth)acrylate, ethoxylated (1 to 100) trimethylolpropane triacrylate, glycerin propoxytriacrylate, ditrimethylolpropane tetraacrylate, dipentaerythritol hexaacrylate, polydiallyl phthalate, etc., are used, for example.

For the compound with ethylenic unsaturated bond having an amino and/or amide group in the active energy ray-curable inkjet printing ink composition, preferably one or more types selected from the group that consists of N-vinylformamide, N-vinylacetamide, N,N-diethylacrylamide, acryloylmorpholine, N-vinylpyrrolidone, N-vinyl-2-caprolactam, methylene-bis-acrylamide, and ethylene-bis-acrylamide, are used, for example.

For the compound having two active energy ray-curable functional groups and two amino groups in its molecule in the active energy ray-curable inkjet printing ink composition, preferably one or more types selected from the group that consists of acrylated amine compounds obtained by reacting 1,6-hexanediol di(meth)acrylate with an amine compound, CN371 (oligomer of an acrylated amine compound having two photopolymerizable functional groups and two amino groups in its molecule) manufactured by Sertomer Company Inc., and EBECRYL 7100 manufactured by Daicel-Allnex Ltd, are used, for example.

In the active energy ray-curable inkjet printing ink composition, preferably a polymerization initiator, especially photopolymerization initiator, is used, where preferably one or more types selected from acylphosphine oxide-based compounds (2,4,6-trimethylbenzoyl-diphenyl-phosphine oxide, bis(2,4,6-trimethylbenzoyl)-phenylphosphine oxide, etc.), aromatic ketone-based compounds (Michler's ethyl ketone, etc.), thiophenyl-based compounds (4-benzoyl-4'-methyldiphenyl sulfide, 4'-(methylthio)-α-morpholino-α-methylpropiophenone, etc.), benzophenone-based compounds (4,4'-diethylaminobenzophenone, etc.), thioxanthone-based compounds (2,4-diethylthioxanthone, etc.), etc., are used, for example. It should be noted that, from the viewpoint of the environment, etc., a polymerization initiator need not be used and preferably it should not be used in the case of electron beam irradiation.

Preferably the active energy ray-curable inkjet printing ink composition contains a coloring pigment, pigment dispersant, photosensitizer, quinone-based compound, or carboxylic acid alkyl ester, or other polymerization inhibitor, silicon-based leveling agent, etc. Furthermore, one or more types selected from the group that consists of the components listed in <Other Components>, such as solvent, surfactant, dispersant, filler (extender pigment), sensitizer, pH adjusting agent, humectant, antioxidant, oxygen scavenger, reducing agent, fading inhibitor, halation inhibitor, fluorescent whitening agent, plasticizer, flame retardant, foaming agent, anti-static agent, magnetic body, storage stabilizer, surface tension adjuster, slipping agent, anti-blocking agent, photostabilizer, leveling agent, defoaming agent, UV absorbent, infrared absorbing agent, thickening agent (thixotropy agent), antibacterial/antifungal agent, etc., may be used, for example; however, the selection is not limited to the foregoing.

The compositional makeup of the active energy ray-curable inkjet printing ink composition may be as follows, for example: 0.1 to 50% by mass, or preferably 5 to 50% by mass, of one or more types of compound expressed by Formula (1) and/or Formula (2); 0 to 70% by mass, or preferably 0 to 60% by mass, or more preferably 1 to 50% by mass, of a compound with ethylenic unsaturated bond other than the compound expressed by Formula (1) or Formula (2); 0 to 30% by mass, or preferably 1 to 30% by mass, of a colorant; 0 to 20% by mass, or preferably 0 to 10% by mass, of a resin; 0 to 60% by mass, or preferably 5 to 60% by mass, of a compound with ethylenic unsaturated bond having an amino and/or amide groups; 0 to 15% by mass, or preferably 1 to 12% by mass, of a compound having two active energy ray-curable functional groups and two amino groups in its molecule; 0 to 20% by mass, or preferably 3 to 20% by mass, or more preferably 5 to 15% by mass, of a polymerization initiator; 0 to 5% by mass of a sensitizer; 0.1 to 5% by mass of a polymerization inhibitor; 0.005 to 1.0% by mass of a surfactant; 0 to 5% by mass of a sensitizer; 0.1 to 10% by mass of a pigment dispersant; and 0.1 to 2% by mass of a leveling agent.

The active energy ray-curable inkjet printing ink composition may be printed using any standard inkjet printing technology. For example, this may be done by supplying the active energy ray-curable inkjet printing ink composition to the printer head of a known printer device of inkjet recording type, and then discharging the active energy ray-curable inkjet printing ink composition from this printer head to any of the aforementioned base materials or other material to be recorded on, to a film thickness of 1 to 20 μm.

Irradiating an active energy ray on an undried printed matter produced by inkjet printing allows the ink composition present on the surface of the printing paper to cure due to the irradiation of the active energy ray, which means that a dried printed matter can be obtained instantly. While electron beams, ultraviolet ray or other known active energy ray may be adopted as the active energy ray, use of ultraviolet ray, especially ultraviolet ray from a LED light source, is preferred from the viewpoints of installation cost, ease of operation, etc.

The active energy ray-curable inkjet printing ink composition not only provides beautiful printed matters with high gloss that convey information and serve as objects of appreciation, but it can also be used for packaging and other applications.

[Active Energy Ray-curable Flexographic Printing Ink Composition]

The active energy ray-curable flexographic printing ink composition proposed by the present invention contains the aforementioned active energy ray-curable composition containing one or more types of compound expressed by Formula (1) and/or Formula (2). It may further contain one or more of compound with ethylenic unsaturated bond other than the compound expressed by Formula (1) or Formula (2), colorant, resin, plant oil-modified polyfunctional (polyester) oligomer, and (meth)acrylamide-based compound. The viscosity of the active energy ray-curable flexographic printing ink composition is in a range of 300 to 2000 mPa•s, or preferably in a range of 500 to 1500 mPa•s.

For the compound with ethylenic unsaturated bond other than the compound expressed by Formula (1) or

Formula (2) in the active energy ray-curable flexographic printing ink composition, preferably one or more types selected from the group that consists of polyethylene glycol mono (meth)acrylate, polyethylene glycol di(meth)acrylate, polyoxypropylene-modified neopentyl glycol di(meth)acrylate, dipentaerythritol penta(meth)acrylate, rosin-modified epoxy (meth)acrylate, methyl (meth)acrylate, ethyl (meth)acrylate, butyl (meth)acrylate, hexyl (meth)acrylate, octyl (meth)acrylate, dodecyl (meth)acrylate and other alkyl acrylates, (meth)acrylic acid, (meth)acrylic acid ethylene oxide adduct, (meth)acrylic acid propylene oxide adduct, isobornyl (meth)acrylate, cyclohexyl (meth)acrylate, styrene, epoxylated plant oil (meth)acrylate, hexanediol di(meth)acrylate, trimethylolpropane tri(meth)acrylate, glycerin propoxytri(meth)acrylate, ditrimethylolpropane tetra(meth)acrylate, dipentaerythritol penta(meth)acrylate, polydiallyl phthalate, rosin-modified epoxy(meth)acrylate, etc., are used, for example.

For the plant oil-modified polyfunctional (polyester) oligomer in the active energy ray-curable flexographic printing ink composition, any polyester oligomer having two or more (meth)acrylate groups in its molecule and modified by a plant oil may be used without limitation. This way, the biomass proportion of the active energy ray-curable flexographic printing ink composition can be increased, which is desired.

The plant oil used for modification is a term including one of various types of fatty acid esters contained in plant oils or fatty acids, etc., obtained by hydrolyzing these various types of fatty acid esters. For the plant oil, soybean oil, canola oil, sunflower oil, tall oil, corn oil, etc., may be used. Among these, preferably tall oil, which is nonedible, is used as the plant oil for modification.

For the polyfunctional (polyester) oligomer, preferably one or more types selected from the group that consists of plant oil-modified (polyester) oligomers having six (meth)acrylate groups in the molecule, such as EBECRYL 450 and EBECRYL 452 manufactured by Daicel-Allnex Ltd., tall oil fatty acid-modified hexafunctional polyester acrylates (such as AgiSyn 716, product name, manufactured by DSM-Agi Corporation, etc.), are used, for example.

For the (meth)acrylamide-based compound in the active energy ray-curable flexographic printing ink composition, one or more types selected from the group that consists of N-methylol(meth)acrylamide, diacetone (meth)acrylamide, N,N-dimethyl(meth)acrylamide, N,N-diethyl(meth)acrylamide, N-isopropyl(meth)acrylamide, (meth)acryloylmorpholine, N,N-dimethylaminopropyl(meth)acrylamide, N,N-diethylaminopropyl(meth)acrylamide, methylene-bis-acrylamide, ethylene-bis-acrylamide, etc., may be used, for example.

In the active energy ray-curable flexographic printing ink composition, preferably a polymerization initiator, especially photopolymerization initiator, is used, where preferably one or more types selected from acylphosphine oxide-based compounds (2,4,6-trimethylbenzoyl-diphenyl-phosphine oxide), bis(2,4,6-trimethylbenzoyl)-phenylphosphine oxide, etc.), aromatic ketone-based compounds (Michler's ethyl ketone, etc.), thiophenyl-based compounds (4-benzoyl-4'-methyldiphenyl sulfide, etc.), etc., are used, for example. It should be noted that, from the viewpoint of the environment, etc., a polymerization initiator need not be used and preferably it should not be used in the case of electron beam irradiation.

Preferably the active energy ray-curable flexographic printing ink composition contains a coloring pigment, dispersant, wax, nitrosoamine-based compound or other polymerization inhibitor, defoaming agent, etc. Furthermore, one or more types selected from the group that consists of the components listed in <Other Components>, such as solvent, surfactant, dispersant, filler (extender pigment), sensitizer, pH adjusting agent, humectant, antioxidant, oxygen scavenger, reducing agent, fading inhibitor, halation inhibitor, fluorescent whitening agent, plasticizer, flame retardant, foaming agent, anti-static agent, magnetic body, storage stabilizer, surface tension adjuster, slipping agent, anti-blocking agent, photostabilizer, leveling agent, defoaming agent, UV absorbent, infrared absorbing agent, thickening agent (thixotropy agent), antibacterial/antifungal agent, etc., may be used, for example; however, the selection is not limited to the foregoing.

The compositional makeup of the active energy ray-curable flexographic printing ink composition may be as follows, for example: 0.1 to 100% by mass, or preferably 5 to 50% by mass, of one or more types of compound expressed by Formula (1) and Formula (2); 0 to 90% by mass, or preferably 0 to 60% by mass, of a compound with ethylenic unsaturated bond other than the compound expressed by Formula (1) and Formula (2); 0 to 70% by mass, or preferably 20 to 70% by mass, of a plant oil-modified polyfunctional (polyester) oligomer; 0 to 50% by mass, or preferably 20 to 45% by mass, of an acrylamide derivative; 1 to 60% by mass of a colorant; 0 to 20% by mass of a resin; 0 to 25% by mass, or preferably 0.1 to 15% by mass, or more preferably 1 to 15% by mass, of a polymerization initiator; 0 to 5% by mass, or preferably 0.5 to 5% by mass, or more preferably 1 to 4.5% by mass, of a wax; and 0 to 1% by mass of a defoaming agent.

The active energy ray-curable flexographic printing ink composition proposed by the present invention may be printed using any standard flexographic printing technology. Irradiating an active energy ray on an undried printed matter produced by flexographic printing allows the ink composition present on the surface of the printing paper to cure due to the irradiation of the active energy ray, which means that a dried printed matter can be obtained instantly. While electron beams, ultraviolet ray or other known active energy ray may be adopted as the active energy ray, use of ultraviolet ray is preferred from the viewpoints of installation cost, ease of operation, etc.

The active energy ray-curable flexographic printing ink composition not only provides beautiful printed matters with high gloss that convey information and serve as objects of appreciation, but it can also be used for packaging and

other applications.

**Examples**

The present invention is explained more specifically below by providing examples; however, the present invention is not limited by the following examples. It should be noted that, in the following descriptions, "percent" refers to "percent by mass" and "part" refers to "part by mass," unless otherwise specified.
The components used in the Examples and Reference Examples are listed below:

<Compound Expressed by Formula (1)>

- GX-7202: Compound where $R_1$ represents a $-C_{15}H_{31-2n}$ group (n = 0, 1, 2 or 3) and $R_2$ represents a hydrogen in Formula (1) (Cardolite GX-7202, manufactured by Cardolite Corporation)

<Compound Expressed by Formula (2)>

- GX-7201: Compound where $R_3$ represents a $-C_{15}H_{31-2n}$ group (n = 0, 1, 2 or 3) and $R_4$ represents a methyl group in Formula (2) (Cardolite GX-7201, manufactured by Cardolite Corporation)

<Compounds with Ethylenic Unsaturated Bond Other than Compound Expressed by Formula (1) and Formula (2)>

- TMPTA: Trimethylolpropane triacrylate
- A-DAP: Polydiallyl phthalate (manufactured by Osaka Soda Co., Ltd.)
- DI-TMPTA: Ditrimethylolpropane tetraacrylate
- TMPTA: Trimethylolpropane triacrylate
- 3,3,5-trimethylcyclohexyl acrylate (manufactured by Nippon Shokubai Co., Ltd.)
- SR454: Ethoxylated (3) trimethylolpropane triacrylate (product name, manufactured by Arkema S.A.)
- CN371: Compound having two photopolymerizable functional groups and two amino groups in its molecule (product name, manufactured by Arkema S.A.)
- Acryloylmorpholine: Compound with ethylenic unsaturated bond having an amino group and/or an amide group, or (meth)acrylamide-based compound
- UV22C: Rosin-modified epoxy acrylate (product name, manufactured by Harima Chemicals Inc.)
- EBECRYL 450: Plant oil-modified polyfunctional (polyester) oligomer (product name, manufactured by Daicel-Allnex Ltd. (biomass proportion 30%))

<Component Satisfying Condition A>

- Epoxylated soybean oil

<Component Satisfying Condition B>

- Soybean oil

<Photopolymerization Initiators>

- IRGACURE 907: 4'-(methylthio)-$\alpha$-morpholino-$\alpha$-methylpropiophenone (product name, manufactured by BASF SE)

- EAB: 4,4'-diethylaminobenzophenone
- TPO: 2,4,6-trimethylbenzoyl-diphenyl-phosphine oxide
- SB-PI 719: Bis(2,4,6-trimethylbenzoyl)-phenylphosphine oxide
- BMS: 4-benzoyl-4'-methyldiphenyl sulfide
- EMK: Michler's ethyl ketone

<Photosensitizer>

- DETX:2,4-diethylthioxanthone

<Polymerization Inhibitors>

- UV-5: Dioctyl maleate
- UV-22: Quinone-based polymerization inhibitor (manufactured by Kromachem Ltd.)
- IN510: Nitrosoamine-based polymerization inhibitor (product name, manufactured by DAIDOKASEI CO., LTD.)

<Silicone-based Leveling Agents>

- BYK-315N: Product name, manufactured by BYK-Chemie GmbH
- BYK-3 31: Product name, manufactured by BYK-Chemie GmbH <Pigment>
- Carbon black: MA-70 (product name, Mitsubishi Chemical Corporation) <Pigment Dispersant>
- SS32000: SOLSPERSE 32000 (product name, manufactured by Lubrizol Japan Limited)

<Dispersant>

- PB822: AJISPER PB822 (product name, manufactured by Ajinomoto Fine-Techno Co., Inc.)

<Wax>

- SST-1MG: Wax of 1 to 2 μm in average particle size (product name, manufactured by Shamrock Technologies, Inc.)

<Surface-Adjusting Agent >

- PDMS 1000J: Product name, manufactured by Momentive Performance Materials Inc.

<Defoaming Agent>

- AIREX 920: Product name, manufactured by Evonik Industries AG

[Examples 1 to 6; Reference Examples 1 to 3: Active Energy Ray-curable Offset Printing Ink Compositions]

<Preparation of Varnish>

Twenty parts by mass of A-DAP, 79 parts by mass of DI-TMPTA and 1% by mass of methylhydroquinone were

mixed and heated for 60 minutes at 100°C until dissolution, to obtain a varnish.

<Preparation of Ink Compositions>

The obtained varnish was mixed with the respective components listed in Table 1 at the quantity ratios (parts by mass) listed in Table 1, respectively, and then kneaded in a triple roll mill, to prepare the offset printing ink compositions in Examples 1 to 6 and Reference Examples 1 to 3.

The evaluation method is as described below.

<Evaluation of Gloss>

For each ink composition, an RI tester (2-piece split rolls, manufactured by Akira Seisakusho Co., Ltd.) was used to color-test 0.1 cc of the ink composition onto a coated paper (AURORA COAT, manufactured by Nippon Paper Industries Co., Ltd.), which was then irradiated with 40 mJ/cm$^2$ of ultraviolet ray and cured. Next, the value of 60-degree reflection gloss of the color test surface was obtained with a Murakami digital glossmeter (manufactured by Murakami Color Research Laboratory). The results are shown in Table 1.

[Table 1]

| | Examples | | | | | | Reference Examples | | |
|---|---|---|---|---|---|---|---|---|---|
| | 1 | 2 | 3 | 4 | 5 | 6 | 1 | 2 | 3 |
| Varnish | 30.0 | 30.0 | 42.0 | 30.0 | 30.0 | 42.0 | 30.0 | 30.0 | 42.0 |
| GX-7202 | 10.0 | 18.0 | 28.0 | | | | | | |
| GX-7201 | | | | 10.0 | 18.0 | 28.0 | | | |
| TMPTA | | 10.0 | | | 10.0 | | | 10.0 | |
| Epoxylated soybean oil | 10.0 | 2.0 | 2.0 | 10.0 | 2.0 | 2.0 | 10.0 | 20.0 | 30.0 |
| Soybean oil | 10.0 | | | 10.0 | | | 10.0 | | |
| Carbon black | 22.0 | 22.0 | 10.0 | 22.0 | 22.0 | 10.0 | 22.0 | 22.0 | 10.0 |
| IRGACURE 907 | 12.0 | 12.0 | 12.0 | 12.0 | 12.0 | 12.0 | 12.0 | 12.0 | 12.0 |
| EAB | 6.0 | 6.0 | 6.0 | 6.0 | 6.0 | 6.0 | 6.0 | 6.0 | 6.0 |
| Total | 100.0 | 100.0 | 100.0 | 100.0 | 100.0 | 100.0 | 90.0 | 100.0 | 100.0 |
| Gloss value | 47 | 52 | 55 | 48 | 53 | 56 | 44 | 45 | 50 |

[Examples 7, 8; Reference Examples 4, 5: Active Energy Ray-curable Inkjet Printing Ink Compositions]

<Preparation of Base Composition>

A mixture prepared by mixing a pigment (C. I. Pigment Blue 15:4), a pigment dispersant (SS32000) and a photopolymerizable component (benzyl acrylate) at the mixing ratios (ratios by mass) of 20.6/7.3/72.1 was dispersed in an Eiger mill (using zirconia beads of 0.5 mm in diameter as media), to obtain a base composition.

<Preparation of Inkjet Printing Ink Compositions>

The obtained base composition was mixed with the respective components listed in Table 1 at the quantity ratios (parts by mass) listed in Table 1, respectively, and then agitated, to obtain the inkjet printing ink compositions in Examples 7, 8, and Reference Examples 4, 5.

The evaluation methods are as described below.

<Viscosity of Ink Composition>

Each ink composition was measured for viscosity using a type-E viscometer (product name: RE100L viscometer, manufactured by Toki Sangyo Co., Ltd.) under the conditions of 25°C in temperature and 20 rpm in rotor speed. The results are shown in Table 2.

<Preservation Stability>

Each ink composition was taken into a glass vial which was then sealed and preserved for seven days at 70°C, after which the condition of the ink composition was evaluated according to the evaluation criteria below:

○: There is no thickening or sedimentation.
Δ: There is thickening or sedimentation that disappears after gentle shaking.
×: There is thickening or sedimentation that does not disappear after strong shaking.

<Discharge Stability>

An inkjet printing (recording) device equipped with an inkjet nozzle for low-viscosity ink, and each ink composition, were let stand for 24 hours at an ambient temperature of 25°C, to bring the temperatures of the inkjet printing device and each ink composition to 25°C. Thereafter, at 25°C, a PVC80 (vinyl chloride resin sheet (12 cm x 18 cm), manufactured by LINTEC Corporation) was continuously printed (printing) using each ink composition to evaluate discharge stability according to the criteria below:

○: Printing is not disturbed and discharge is stable.
△: Printing is somewhat disturbed, but discharge is mostly stable.
×: Printing is disturbed or discharge is unstable.

<Tackiness>

An inkjet printing (recording) device equipped with an inkjet nozzle for low-viscosity ink, and each ink composition, were let stand for 24 hours at an ambient temperature of 25°C, to bring the temperatures of the inkjet printing device and each ink composition to 25°C. Thereafter, at 25°C, a PVC80 (vinyl chloride resin sheet (12 cm x 18 cm), manufactured by LINTEC Corporation) was continuously printed (printing) using each ink composition, after which the ink composition was cured using a UV-LED lamp manufactured by Phoseon Technology with the distance between the lamp and the ink application surface adjusted to 2 cm, until the cumulative UV light quantity reached 180 $J/m^2$. The surface of the resulting coated film was touched with a finger and then the condition of the coating film was visually checked, to evaluate tackiness:

○: No fingerprint is left on the coating film.
△: Fingerprint is left slightly on the coating film.
×: Fingerprint is left on the coating film.

<Adhesion>

Each coating film obtained in tackiness evaluation was cut crosswise with a cutting knife, after which a cellophane tape (CELLOTAPE (registered trademark), product name, manufactured by Nichiban Co., Ltd.) was adhered to the cut part and then peeled, to evaluate the degree of peeling of the cured film from the vinyl chloride resin sheet according to the criteria below:

○: The cured film does not peel.
△: The cured film peels, but the peeled area is under 20%.
×: The peeled area of the cured film is 20% or greater.

<Bending Resistance>

Each coating film obtained in tackiness evaluation was bent 180 degrees into a mountain fold and then into a

valley fold, to evaluate the bending property of the printed ink composition according to the evaluation criteria below:

○: When bent, the coating film generates no line cracks or microcracks.
△: When bent, the coating film generates microcracks.
×: When bent, the coating film generates line cracks.

<Hardness>

Each coating film obtained in tackiness evaluation was evaluated by the pencil scratch test (for pencil hardness) according to JIS K 5600-5-4.

○: Hardness is H or higher.
△: Hardness is B to HB.
×: Hardness is 2B or lower.

[Table 2]

| | | Examples | | Reference Examples | |
|---|---|---|---|---|---|
| | | 7 | 8 | 4 | 5 |
| GX-7201 | | 12.0 | 12.0 | | |
| Isobornyl acrylate | | 2.0 | 2.0 | 2.0 | 2.0 |
| Benzyl acrylate | | 16.2 | 16.2 | 16.2 | 16.2 |
| Ethyl carbitol acrylate | | 9.5 | 9.5 | 9.5 | 9.5 |
| 3,3,5-trimethylcyclohexyl acrylate | | 15.0 | 15.0 | 15.0 | 15.0 |
| Phenoxyethyl acrylate | | | | 12.0 | 12.0 |
| SR454 | | 8.0 | 8.0 | 8.0 | 8.0 |
| Acryloylmorpholine | | | 14.5 | | 14.5 |
| Vinylcaprolactam | | 14.5 | | 14.5 | |
| CN371 | | 4.0 | 4.0 | 4.0 | 4.0 |
| Pigment dispersion | C.I. Pigment Blue 15:4 | 1.4 | 1.4 | 1.4 | 1.4 |
| | Benzyl acrylate | 4.9 | 4.9 | 4.9 | 4.9 |
| | SS32000 | 0.5 | 0.5 | 0.5 | 0.5 |
| TPO | | 7.0 | 7.0 | 7.0 | 7.0 |
| SB-PI 719 | | 2.0 | 2.0 | 2.0 | 2.0 |
| DETX | | 0.1 | 0.1 | 0.1 | 0.1 |
| UV-5 | | 2.0 | 2.0 | 2.0 | 2.0 |
| UV-22 | | 0.4 | 0.4 | 0.4 | 0.4 |
| BYK-315N | | 0.5 | 0.5 | 0.5 | 0.5 |
| BYK-331 | | 0.1 | 0.1 | 0.1 | 0.1 |
| Total | | 100.0 | 100.0 | 100.0 | 100.0 |
| Viscosity | | 7.3 | 9.1 | 6.8 | 8.9 |
| Discharge stability | | ○ | ○ | ○ | ○ |
| Tackiness | | ○ | ○ | ○ | ○ |
| Adhesion | | ○ | ○ | ○ | ○ |

(continued)

| | Examples | | Reference Examples | |
|---|---|---|---|---|
| | 7 | 8 | 4 | 5 |
| Bending resistance | ○ | ○ | ○ | ○ |
| Hardness | ○ | ○ | ○ | ○ |

[Examples 9 to 11; Reference Example 6: Active Energy Ray-curable Flexographic Printing Ink Compositions]

<Preparation of Ink Composition>

The components listed in Table 3 were mixed at the quantity ratios (parts by mass) listed in Table 3, respectively, and then kneaded in a triple roll mill, to prepare the flexographic printing ink compositions in Examples 9 to 11 and Reference Example 6.

The evaluation methods are as described below.

<Curability>

The ink compositions in Examples 9, 10 and Reference Example 6 were color-tested on a base material (synthetic paper) using an 800-lpi hand proofer and then irradiated with ultraviolet ray (metal halide lamp: 120 W, 80 mJ), to evaluate the number of passes required for curing. The ink composition was considered cured when the coating film was rubbed with a cotton swab and the ink did not attach to the cotton swab. The results are shown in Table 3.

The ink composition in Example 11 was evaluated for the number of passes required for curing in the same manner as were Examples 9, 10, and Reference Example 6, except that an electron beam was irradiated (EB irradiation device; accelerating voltage 90 kV, irradiation dose 30 kGy) instead of irradiating ultraviolet ray. The results are shown in Table 3.

<Adhesion>

The ink compositions in Examples 9, 10 and Reference Example 6 were color-tested on a base material (synthetic paper) using an 800-lpi hand proofer, and then irradiated with ultraviolet ray (metal halide lamp: 120 W, 80 mJ) over three passes and cured, after which CELLOTAPE manufactured by Nichiban Co., Ltd. was adhered to the obtained coating film, rubbed three times with a finger, and then peeled, to visually observe the degree of peeling of the coating film for evaluation according to the criteria below. The results are shown in Table 3.

The ink composition in Example 11 was tested in the same manner as were Examples 9, 10 and Reference Example 6, except that electron beam was irradiated (EB irradiation device; accelerating voltage 90 kV, irradiation dose 30 kGy) instead of irradiating ultraviolet ray, to visually observe the degree of peeling of the coating film for evaluation according to the criteria below. The results are shown in Table 3.

○: The cured film does not peel.
△: The cured film peels, but the peeled area is under 20%.
×: The peeled area of the cured film is 20% or greater.

<Scratch Resistance>

The ink compositions in Examples 9, 10 and Reference Example 6 were color-tested on a base material (synthetic paper) using an 800-lpi hand proofer, and then irradiated with ultraviolet ray (metal halide lamp: 120 W, 80 mJ) over three passes and cured, after which the coating film was rubbed with the tip of a fingernail, to visually observe the degree of detachment of the coating film for evaluation according to the criteria below. The results are shown in Table 3.

The ink composition in Example 11 was tested in the same manner as were Examples 9, 10 and Reference Example 6, except that electron beam was irradiated (EB irradiation device; accelerating voltage 90 kV, irradiation dose 30 kGy) instead of irradiating ultraviolet ray, to visually observe the degree of detachment of the coating film for evaluation according to the criteria below. The results are shown in Table 3.

○: The coating film does not detach.
△: The coating film detaches, but the base material is not exposed.
×: The coating film detaches and the base material is exposed.

<Rub Resistance>

The ink compositions in Examples 9, 10, and Reference Example 6 were color-tested on a base material (synthetic paper) using an 800-lpi hand proofer, and then irradiated with ultraviolet ray (metal halide lamp), 120 W, 80 mJ, over three passes and cured, after which the coating film was rubbed 200 times with a 500-g force using a patch fabric (unbleached muslin No. 3) on a Gakushin-type color fastness tester, to visually observe the condition of the coating film for evaluation according to the criteria below. The results are shown in Table 3.

The ink composition in Example 11 was tested in the same manner as were Examples 9, 10, and Reference Example 6, except that an electron beam was irradiated (EB irradiation device; accelerating voltage 90 kV, irradiation dose 30 kGy) instead of irradiating ultraviolet ray, to visually observe the condition of the coating film for evaluation according to the criteria below. The results are shown in Table 3.

○: No scratch marks are left on the coating film surface.
△: Scratch marks are left on the coating film surface.
×: The coating film is removed and the sheet is exposed.

[Table 3]

| | Examples | | | Reference Example |
|---|---|---|---|---|
| | 9 | 10 | 11 | 6 |
| GX-7202 | 11.0 | | 11.0 | |
| GX-7201 | | 11.0 | | |
| UV22C | 2.0 | 2.0 | 2.0 | 2.0 |
| Ebecryl 450 | 30.0 | 30.0 | 35.5 | 35.0 |
| Acryloylmorpholine | 18.8 | 18.8 | 24.8 | 24.8 |
| TPO | 7.0 | 7.0 | | 7.0 |
| BMS | 2.5 | 2.5 | | 2.5 |
| EMK | 2.0 | 2.0 | | 2.0 |
| Carbon black | 20.0 | 20.0 | 20.0 | 20.0 |
| PB822 | 3.0 | 3.0 | 3.0 | 3.0 |
| SST-1MG | 3.0 | 3.0 | 3.0 | 3.0 |
| IN510 | 0.1 | 0.1 | 0.1 | 0.1 |
| AIREX 920 | 0.6 | 0.6 | 0.6 | 0.6 |
| Total | 100.0 | 100.0 | 100.0 | 100.0 |
| Type of active energy ray | Ultraviolet ray | Ultraviolet ray | Electron beam | Ultraviolet ray |
| Curability | 1 pass | 1 pass | 1 pass | 1 pass |
| Adhesion (PET) | ○ | ○ | ○ | ○ |
| Adhesion (Yupo 80) | ○ | ○ | ○ | ○ |
| Scratch property | ○ | ○ | ○ | ○ |
| Rub resistance | ○ | ○ | ○ | ○ |

As is evident from Examples 1 to 11 and Reference Examples 1 to 6, the active energy ray-curable composition proposed by the present invention is extremely useful in that, particularly when made into an active energy ray-curable

offset printing ink composition, active energy ray-curable inkjet printing ink composition, or active energy ray-curable flexographic printing ink composition, it can easily improve the biomass proportion of the ink composition, while still maintaining the properties equivalent to any conventional ink compositions at the same time.

## Claims

1. An active energy ray-curable composition containing one or more types of compound expressed by Formula (1) and/or Formula (2) below:

Formula (1):

[Chem. 1]

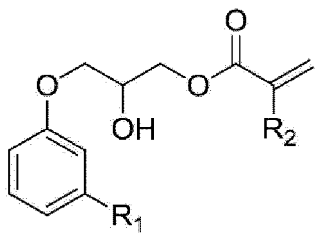

(1)

(in the formula, $R_1$ represents a $-C_{15}H_{31-2n}$ group (n = 0, 1, 2 or 3), and $R_2$ represents a hydrogen or methyl group)

Formula (2):

[Chem. 2]

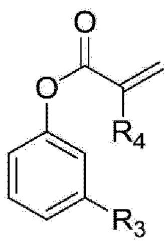

(2)

(in the formula, $R_3$ represents a $-C_{15}H_{31-2n}$ group (n = 0, 1, 2 or 3), and $R_4$ represents a hydrogen or methyl group).

2. The active energy ray-curable composition according to claim 1, further containing a compound with ethylenic unsaturated bond other than the compound expressed by Formula (1) or Formula (2) above.

3. The active energy ray-curable composition according to claim 1 or 2, further containing a colorant.

4. The active energy ray-curable composition according to any one of claims 1 to 3, further containing a resin.

5. The active energy ray-curable composition according to any one of claims 1 to 4, further containing a component satisfying Condition (A) or Condition (B) below:

   Condition (A): Contains a compound with no ethylenic unsaturated bond and of 9.0 $(cal/cm^3)^{1/2}$ or higher but under 11.0 $(cal/cm^3)^{1/2}$ in sp value, and is liquid at normal temperature;
   Condition (B): Contains a compound with no ethylenic unsaturated bond and of under 9.0 $(cal/cm^3)^{1/2}$ in sp value, and is liquid at normal temperature.

6. The active energy ray-curable composition according to any one of claims 1 to 4, further containing a compound with ethylenic unsaturated bond having an amino group and/or an amide group, and/or a compound having two active energy ray-curable functional groups and two amino groups in its molecule.

7. The active energy ray-curable composition according to any one of claims 1 to 4, further containing a plant oil-modified polyfunctional (polyester) oligomer and a (meth)acrylamide-based compound.

8. An active energy ray-curable offset printing ink composition containing the active energy ray-curable composition according to any one of claims 1 to 5.

9. An active energy ray-curable inkjet printing ink composition containing the active energy ray-curable composition according to any one of claims 1 to 4 and 6.

10. An active energy ray-curable flexographic printing ink composition containing the active energy ray-curable composition according to any one of claims 1 to 4 and 7.

## INTERNATIONAL SEARCH REPORT

International application No.
PCT/JP2019/050742

A. CLASSIFICATION OF SUBJECT MATTER
Int.Cl. C08F2/44(2006.01)i, C08F2/46(2006.01)i, C09D11/101(2014.01)i, C09D11/30(2014.01)i, C09D11/36(2014.01)i
FI: C08F2/46, C08F2/44Z, C09D11/101, C09D11/30, C09D11/36
According to International Patent Classification (IPC) or to both national classification and IPC

B. FIELDS SEARCHED
Minimum documentation searched (classification system followed by classification symbols)
Int.Cl. C08F2/44, C08F2/46, C09D11/101, C09D11/30, C09D11/36

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | CN 107089914 A (INSTITUTE OF CHEMICAL INDUSTRY OF FOREST PRODUCTS, CHINESE ACADEMY OF FORESTRY) 25.08.2017 (2017-08-25), claims, examples | 1-2, 8-10<br>3-7 |
| Y | JP 2018-115223 A (SAKATA INX CORPORATION) 26.07.2018 (2018-07-26), claims, paragraphs [0021], [0030]-[0039], examples | 3-7 |
| Y | JP 2005-15755 A (TOYO INK MFG CO., LTD.) 20.01.2005 (2005-01-20), claims, paragraphs [0040]-[0047], [0056], examples | 3-5, 7 |
| Y | JP 2004-359767 A (TOYO INK MFG CO., LTD.) 24.12.2004 (2004-12-24), claims, paragraphs [0020]-[0027], [0034], examples | 3-5, 7 |
| Y | WO 2018/173785 A1 (SAKATA INX CORPORATION) 27.09.2018 (2018-09-27), claims, paragraphs [0018], [0021], [0024], examples | 3-4, 6-7 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04.03.2020 | 17.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/050742

| | | |
|---|---|---|
| CN 107089914 A | 25.08.2017 | (Family: none) |
| JP 2018-115223 A | 26.07.2018 | US 2019/0359835 A1<br>claims, paragraphs [0024], [0034]-[0046], examples<br>WO 2018/131666 A1<br>EP 3569664 A1<br>CN 110382639 A |
| JP 2005-15755 A | 20.01.2005 | (Family: none) |
| JP 2004-359767 A | 24.12.2004 | (Family: none) |
| WO 2018/173785 A1 | 27.09.2018 | CA 3056747 A1<br>claims, paragraphs [0018], [0021], [0024], examples<br>JP 2018-159038 A<br>CN 110431198 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017137369 A
- JP 2015081264 A
- JP 5335436 B


### Non-patent literature cited in the description


- *J. Appl. Polym. Sci.,* 1968, vol. 12, 2359